# EUROPÄISCHE PATENTANMELDUNG

(11) **EP 3 868 553 A1**
(43) Veröffentlichungstag der Anmeldung: **25.08.2021**
(21) Anmeldenummer: 20157873.9
(22) Anmeldetag: 18.02.2020
(51) Int. Cl.: B32B 5/12, B29C 70/06, B32B 1/00, B32B 5/02, B32B 5/08, B32B 5/26, B32B 5/28, B60R 13/00, B62D 29/04, C08J 5/04

(54) **MEHRSCHICHTVERBUNDWERKSTOFF**

(71) Anmelder: LANXESS Deutschland GmbH, 50569 Köln (DE)
(72) Erfinder: WANDERS, Martin, 51519 Odenthal (DE); SEIDEL, Stefan, 33102 Paderborn (DE)

(57) **Zusammenfassung**

Die vorliegende Erfindung betrifft einen Mehrschichtverbundwerkstoff auf Basis von Polyamid, ein Verfahren zu dessen Herstellung sowie ein Strukturbauteil oder ein Trägerbauteil für die Anwendung im Automobil oder Bauwesen, umfassend einen solchen Mehrschichtverbundwerkstoff.

## Beschreibung

Die vorliegende Erfindung betrifft einen Mehrschichtverbundwerkstoff auf Basis von Polyamid, ein Verfahren zu dessen Herstellung sowie ein Strukturbauteil oder ein Trägerbauteil für die Anwendung im Automobil oder Bauwesen, umfassend einen solchen Mehrschichtverbundwerkstoff.

### Stand der Technik

Aus dem Stand der Technik sind zahlreiche Faserverbundwerkstoffe und Verfahren zu deren Herstellung bekannt. WO2013/098224 A1 beschreibt ein Verfahren zur Herstellung eines Faserverbundwerkstoffs in Form eines kunststoffimprägnierten Breitfaserbandes und eine aus Abschnitten des Breitfaserbandes erhältliche Mehrschichtverbundstruktur. Als Kunststoffmatrix können sowohl duroplastische, als auch thermoplastische Kunststoffe verwendet werden.

DE102012200059 A1 beschreibt einen faserverstärkten Mehrschichtverbundwerkstoff dessen Kunststoffmatrix ein thermoplastischer Kunststoff ist. Allerdings sind die aus dem Stand der Technik bekannten Mehrschichtverbundwerkstoffe hinsichtlich ihrer optischen, klanglichen, haptischen und mechanischen Eigenschaften erheblich verbesserungswürdig, wenn es darum geht, sich den Eigenschaften von Gehäusen aus Metalllegierungen anzunähern.

In den letzten Jahren besteht insbesondere auf dem Gebiet der Strukturbauteile im Automobil oder auch bei großflächigen industriellen Anwendungen wie Schaltafeln für das Bauwesen oder Trägermaterialien für Solarzellen, der Trend zu immer leichteren und dünneren Bauteilen. Dies erfordert unter anderem die Entwicklung von extrem leichten und dünnen Konstruktionen, die gleichzeitig eine hohe mechanische Stabilität aufweisen, um die erforderlichen mechanischen Eigenschaften zu erfüllen. Als Stand der Technik für Automobilanwendungen haben sich mittlerweile beispielsweise Aluminium-Legierungen etabliert. Vorteilhaft an Konstruktionen aus solchen Metalllegierungen sind ihr leichtes Gewicht und ihre hohe mechanische Stabilität. Darüber hinaus werden derartige Metallbauteile vom Verbraucher auch als ästhetisch ansprechend und hochwertig empfunden. Bauteile aus herkömmlichem Plastik werden vom Verbraucher dagegen als eher minderwertig empfunden und können auch im Hinblick auf die mechanischen Eigenschaften nicht mit den Metalllegierungen konkurrieren. Letztere haben allerdings den erheblichen Nachteil, dass sie aus kostenintensiven Rohstoffen in aufwändigen und energieintensiven Verfahren hergestellt werden müssen, was mit hohen Herstellungskosten verbunden ist. Auch im Hinblick auf die Ressourcenschonung ist es deshalb wünschenswert, gleichwertige Ersatzmaterialien für die im Stand der Technik verwendeten Metalllegierungen zu entwickeln.

Einen Ansatz hierzu bietet WO 2017/072053 A1 worin mehrschichtige Faserverbundwerkstoffe zu diesem Zweck beschrieben werden. Die in WO 2017/072053 A1 beschriebenen mehrschichtigen Faserverbundwerkstoffe basieren jedoch ausschließlich auf unidirektional orientierten Verstärkungsfasern. In jeder Schicht weisen die in den mehrschichtigen Faserverbundwerkstoffen gemäß WO 2017/072053 A1 verarbeiteten Fasermaterialien nur eine Orientierung auf und führen damit zu deutlich anisotropen mechanischen Eigenschaften. Hierdurch unterscheiden sich die mehrschichtigen Faserverbundwerkstoffe gemäß WO 2017/072053 A1 ganz erheblich von den Eigenschaften metallischer Werkstoffe in Bezug auf optische, haptische, klangliche und mechanische Eigenschaften.

Im Stand der Technik werden als Kunststoffmatrixmaterialien für Faserverbundwerkstoffe vor allem thermisch härtende duroplastische Kunststoffe (Duroplaste), wie Harnstoff-Formaldehyd-Harze oder Epoxidharze, oder kurzglasfaserverstärkte thermoplastische Kunststoffe (Thermoplaste), wie Polyamide, Polypropylen oder Polyethylen, eingesetzt. Grundsätzlich wäre es jedoch unter Recycling-Gesichtspunkten wünschenswert, das Einsatzgebiet von Thermoplasten, insbesondere von Polyamiden, auch auf Compositmaterialien mit Endlosfaserverstärkung auszuweiten, denn Polyamid als solches lässt sich gut recyclen. Polyamid weist eine hohe Flexibilität und Temperaturstabilität auf und ist im Verarbeitungszustand sehr gut fließfähig, wodurch es sich hervorragend für den Einsatz als Compositematrix für Bauteile in thermisch belasteten Bereichen eignet und auch für die Herstellung von thermoplastischen Compositematerialien Vorteile bietet. Vor diesem Hintergrund besteht nach wie vor das Bedürfnis, zu den oben beschriebenen Metalllegierungen alternative leichtgewichtige Materialien zu entwickeln, die ähnliche optische, haptische, klangliche und mechanische Eigenschaften wie Gehäuse auf Basis von Metalllegierungen aufweisen, sich aber kostengünstiger herstellen lassen.

Ausgehend vom Stand der Technik bestand die Aufgabe der vorliegenden Erfindung darin, ein neues Material bereit zu stellen, das insbesondere quasi-isotrope Steifigkeit aufweist und als Versteifungsmaterial für ein Bauteil aus der Automobil- oder Consumerindustrie besser geeignet ist, als die Materialien der WO 2017/072053 A1**.** Hierfür sollte das Material darüber hinaus leichtgewichtig sein, sich kostengünstig herstellen lassen und eine möglichst glatte und damit optisch ansprechende Oberfläche aufweisen.

Es wurde überraschenderweise gefunden, dass man einen Mehrschichtverbundwerkstoff auf Basis von Polyamid basiertem Kunststoff mit einer quasi-isotropen Steifigkeit erhält, wenn mindestens drei Faserverbundwerkstofflagen die relativ zueinander definiert werden als zwei außenliegende Faserverbundwerkstofflagen und mindestens eine innenliegende Faserverbundwerkstofflage übereinander liegen, wobei jede dieser mindestens drei Faserverbundwerkstofflagen Endlosfasern in Form eines textilen Halbzeugs enthält, und die Endlosfasern innerhalb der jeweiligen Faserverbundwerkstofflage beliebig orientiert sowie in Polyamid basiertem Kunststoff eingebettet sind mit der Maßgabe, dass im Falle nur einer innenliegenden Faserverbundwerkstofflage diese im Verhältnis zu den außenliegenden Faserverbundwerkstofflagen um 0° bis 90° rotiert ist, oder im Falle von zwei und mehr innenliegenden Faserverbundwerkstofflagen diese innenliegenden Faserverbundwerkstofflagen im Wesentlichen gleich orientiert sind und ihre Orientierung zu den außenliegenden Faserverbundwerkstofflagen um 0° bis 90° rotiert ist, und die Orientierung einer Faserverbundwerkstofflage durch die Orientierung des die Endlosfasern enthaltenden textilen Halbzeugs festgelegt wird.

### Erfindungsgegenstand

### Gegenstand der vorliegenden Erfindung und Lösung der Aufgabe ist ein

Mehrschichtverbundwerkstoff, umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in Polyamid basiertem Kunststoff (5) eingebettet sind,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.

Die erfindungsgemäßen Mehrschichtverbundwerkstoffe weisen den Vorteil auf, dass sie sich kostengünstig herstellen lassen und eine quasi-isotrope Steifigkeit aufweisen. Zudem zeichnen sich die erfindungsgemäßen Mehrschichtverbundwerkstoffe durch Lackierbarkeit ohne Vorbehandlung und Hinterspritzbarkeit aus, wenn als thermoplastischer Kunststoff Polyamid basierter Kunststoff eingesetzt wird.

Vorteilhaft an den erfindungsgemäßen Mehrschichtverbundwerkstoffen ist ferner, dass deren Gestaltung, insbesondere in Form eines flächigen Bauteils, durch die Thermoformbarkeit des Mehrschichtverbundwerkstoffs selber besonders einfach und flexibel erfolgen kann und durch diesen Verarbeitungsschritt weitestgehend beliebige Oberflächenqualitäten eingestellt werden können.

Praktische Versuche im Rahmen der vorliegenden Erfindung haben gezeigt, dass die erfindungsgemäßen Mehrschichtverbundwerkstoffe unter zweidimensionaler Biegebelastung, insbesondere beim Einsatz von Endlosfasern in Form textiler Halbzeuge bei denen es keine vorherrschende Faserorientierung gibt, im 3- oder 4-Punktbiegeversuch unter jeder der vorliegenden Faserorientierungen weitestgehend identische Eigenschaften aufwiesen. Insbesondere die Biegefestigkeit unterschied sich zwischen zwei Orientierungen, die sich vorzugsweise um einen Winkel von 90° unterscheiden, nur um weniger als 5%!

Gegenstand der Erfindung ist ferner ein Verfahren zur Herstellung eines erfindungsgemäßen Mehrschichtverbundwerkstoffs umfassend folgende Schritte:
- Bereitstellen mindestens einer innenliegenden Faserverbundwerkstofflage (2) und zweier außenliegenden Faserverbundwerkstofflagen (3),
- Einlegen der mindestens einen innenliegenden Faserverbundwerkstofflage (2) zwischen die außenliegenden Faserverbundwerkstofflagen (3),
- Verbinden der geschichteten Faserverbundwerkstofflagen (2) und (3), insbesondere mittels Druck und Temperatur, zum Mehrschichtverbundwerkstoff (1),
mit der Maßgabe, dass jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in Polyamid basiertem Kunststoff (5) eingebettet sind, und
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.

Gegenstand der Erfindung ist ferner ein Verfahren zur Herstellung eines erfindungsgemäßen Gehäuses oder Gehäuseteils umfassend wenigstens einen erfindungsgemäßen Mehrschichtverbundwerkstoff.

Gegenstand der Erfindung ist zudem die Verwendung wenigstens eines Mehrschichtverbundwerkstoffs umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in Polyamid basiertem Kunststoff (5) eingebettet sind, zur Herstellung von Strukturbauteilen, vorzugsweise von Strukturbauteilen für den Einsatz im Automobil,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.

Gegenstand der Erfindung sind schließlich Erzeugnisse, vorzugsweise großflächige Bauteile, insbesondere bevorzugt Strukturbauteile im Automobil, umfassend wenigstens einen erfindungsgemäßen Mehrschichtverbundwerkstoff.

Der Begriff **Endlosfaser** ist im Sinne der Erfindung als Abgrenzung zu den dem Fachmann ebenfalls bekannten Kurz- oder Langfasern zu verstehen. Endlosfasern erstrecken sich in der Regel über die gesamte Länge einer Faserverbundwerkstofflage. Die vorliegende Erfindung bezieht sich auf DIN 60001, wonach Fasern mit einer Länge von mindestens 1.000 mm, d. h. einem Meter, als Endlosfasern bezeichnet werden. Insbesondere nach Verarbeitung und Zuschnitt können die hergestellten Erzeugnisse kleinere Abmessungen als 1m haben und damit durchaus Faserlängen von unter einem Meter aufweisen, die im Sinne der Erfindung immer noch als Endlosfasern bezeichnet werden. Zum Begriff Endlosfaser (Filament) siehe auch:

### https://de.wikipedia.org/wiki/Faser-Kunststoff-Verbund

Der Begriff **textiles Halbzeug** bzw. **Textil** ist im Rahmen der Erfindung ein textiles Produkt, das mit handelsüblichen Herstellverfahren, insbesondere dem Weben, fabriziert wird und bei dem die beschriebenen Endlosfasern als Ausgangswerkstoff verwendet werden. Im Sinne der Erfindung liegen die Endlosfasern damit über die gesamte Textillänge und über die gesamte Textilbreite vor. Durch die Imprägnierung mit der Kunststoffmatrix ändert sich nichts an der Länge und Position der Endlosfasern, sodass sich auch bei einer Verstärkung durch ein textiles Halbzeug bzw. Textil die Endlosfasern über die gesamte Länge bzw. die gesamte Breite des Faserverbundwerkstoffs erstrecken. Ein Textil kann auch aus Stapelfasen oder Wirrmatten bestehen, bei denen die einzelnen Endlosfasern sich zwar nicht über die gesamte Breite eines Faserverbundwerkstoffs und damit eines erfindungsgemäßen Mehrschichtverbundwerkstoffs erstrecken, die aber einzeln betrachtet deutlich länger als üblicherweise als "Langfasern" bezeichnete Fasern sind und zusätzlich durch formschlüssige Verbindung ein Garn oder eine Matte bilden, die sich wiederum über die gesamte Breite eines Faserverbundkunststoffs und damit eines erfindungsgemäßen Mehrschichtverbundwerkstoffs erstrecken und somit im Sinne der Erfindung auch als Endlosfasern klassifiziert werden.

Unter **textilem Halbzeug** im Sinne der vorliegenden Erfindung wird auch ein Endlos-Faserband verstanden, wobei es sich um eine Mehrzahl von zusammengeführten Rovings handelt und wobei es sich bei den Rovings um Bündel aus vielen Endlosfasern ohne Drall handelt.

**Quasi-isotrope** Steifigkeit im Sinne der Erfindung bedeutet, dass die Biegesteifigkeit des Faserverbundwerkstoffes in den Hauptrichtungen 0° und 90° in der Ebene des Faserverbundmaterials sich um weniger als 5% voneinander unterscheiden.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Dies gilt ebenso für Kombinationen einzelner chemischer Komponenten mit allen in der vorliegenden Anmeldung aufgeführten physikalischen Parametern, Die im Rahmen dieser Anmeldung genannten Normen beziehen sich auf die zum Anmeldetag dieser Erfindung geltende Fassung.

### Bevorzugte Ausführungsformen der Erfindung

Zur Verbesserung der Optik und Glattheit der Oberfläche eines erfindungsgemäßen Mehrschichtverbundwerkstoffs hat es sich als vorteilhaft erwiesen, wenn dieser Mehrschichtverbundwerkstoff vorzugsweise ein Dickenverhältnis der Summe der beiden außenliegenden Faserverbundwerkstofflagen zur Summe aller innenliegenden Faserverbundwerkstofflagen im Bereich von 0,25 bis 5 aufweist, besonders bevorzugt ein Dickenverhältnis im Bereich von 0,8 bis 3, ganz besonders bevorzugt ein Dickenverhältnis im Bereich von 1 bis 2,5.

Vorzugsweise liegen die Endlosfasern in einem erfindungsgemäßen Faserverbundwerkstoff in Form eines textilen Halbzeugs aus der Gruppe balancierter Gewebe, Vlies oder Fasermatte vor, wobei die Endlosfasern innerhalb der jeweiligen Faserverbundwerkstofflage beliebig ausgerichtet sind. Insbesondere bevorzugt sind Faserverbundwerkstoffe in Form eines textilen Halbzeugs, worin die Endlosfasern in Form eines balancierten Gewebes vorliegen und worin die Endlosfasern beliebig ausgerichtet sind.

**Gewebe** sind textile Flächengebilde, die aus zwei Fadensystemen, Kette (Kettfäden) und Schuss (Schussfäden), bestehen, die sich in der Sicht auf die Gewebefläche unter einem Winkel von genau oder annähernd 90° mustermäßig kreuzen. Die Kettfäden verlaufen in Längsrichtung des Gewebes, parallel zur Gewebekante, und die Schussfäden in Querrichtung, parallel zum Geweberand. Die Herstellung von Geweben erfolgt entweder durch Handweben auf einem Handwebstuhl oder maschinell auf einer Webmaschine. Die Art der Verkreuzung von Kett- und Schussfäden in einem Gewebe wird als Bindung bezeichnet. Je nachdem, welche Kettfäden beim Weben angehoben bzw. gesenkt werden, entsteht eine unterschiedliche Verteilung von Bindungspunkten und damit eine unterschiedliche Gewebebindung, die das Warenbild bestimmt. Den Teil der Bindung, der die Art der Verkreuzung der Kett- und Schussfäden bis zu ihrer Wiederholung angibt, wird als Rapport bezeichnet. Entsprechend der Grundbindungen von Geweben gibt es Leinwand-, Köper- oder Atlasgewebe, wovon erfindungsgemäß Köpergewebe bevorzugt sind. Als **balanciert** gilt im Sinne der Erfindung ein Gewebe, bei dem die Anzahl der Kett- und Schussfäden über einer definierte Länge identisch ist und Kett- und Schussfaden die gleiche Garnstärke haben.

Vorzugsweise sind die einzelnen erfindungsgemäß einzusetzenden Faserverbund-werkstofflagen erhältlich durch Auftragen von geschmolzenem Polyamid basiertem Kunststoff auf ein über die Kristallitschmelztemperatur des einzusetzenden Kunststoffs vorgeheiztes textiles Halbzeug, auch als Rohtextil bezeichnet. Teilkristalline Polymere, speziell solche, die mit Füllstoffen verstärkt sind, können auch oberhalb ihrer Glastemperatur noch eingesetzt werden. Dies liegt daran, dass teilkristalline Polymere zusätzlich zur Glastemperatur T_{g} noch eine Kristallitschmelztemperatur Tₘ aufweisen, welche meist deutlich höher als die T_{g} liegt. Die Zustandsbereiche von teilkristallinen thermoplastischen Kunststoffen, wie Polypropylen, beginnend bei spröde, über zähelastisch-hart bis plastisch und die dabei auftretenden T_{g} und Tₘ werden im **WIPO Wissensportal des KRV** - **Kunststoffrohrverband e.V., Bonn, 2019,** dargestellt.

### Siehe: https://www.krv.de/artikel/glasuebergangstemperatur.

Vorzugsweise liegt der Faservolumengehalt der außenliegenden Faserverbundwerkstofflagen bei höchstens 60 Vol.-%, bezogen auf das Volumen der außenliegenden Faserverbundwerkstofflagen.

### Polyamid

Das im Polyamid basierten Kunststoff einzusetzende **Polyamid** kann nach verschiedenen Verfahren hergestellt und aus unterschiedlichen Bausteinen synthetisiert werden. Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichts oder auch Monomere mit reaktiven Gruppen für später beabsichtigte Nachbehandlungen eingesetzt werden können.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bisaminomethylcyclohexan, Phenylendiamine, Xylylendiamine, Aminocarbonsäuren wie z.B. Aminocapronsäure, bzw. die entsprechenden Lactame in Betracht. Besonders bevorzugt werden Caprolactame, insbesondere ε-Caprolactam eingesetzt. Copolyamide aus mehreren der genannten Monomeren sind eingeschlossen.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als besonders bevorzugte Polyamide werden Polyamid 6, Polyamid 66, Polyamid 46 und/oder teilaromatische Copolyamide für die erfindungsgemäß einzusetzende Kunststoffkomponente eingesetzt. Bevorzugte teilaromatische Copolyamide sind PA6T/6, PA6T/66, PA6T/6I oder PA6T/6I/66. Erfindungsgemäß ganz besonders bevorzugte Polyamide sind Polyamid 6 oder Polyamid 66, wobei Polyamid 6 insbesondere ganz besonders bevorzugt ist.

Die im Rahmen der vorliegenden Anmeldung benutzte Kennzeichnung der Polyamide entspricht der internationalen Norm **ISO 1874-1,** wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω- Aminocarbonsäure bzw. von dem davon abgeleiteten Lactam, im Falle des PA 6 also dem ε-Caprolactam, ausgegangen worden ist.

Das erfindungsgemäß bevorzugt einzusetzende PA6 [CAS Nr. 25038-54-4] hat vorzugsweise eine nach **ISO 307** in 0,5 gew.-%iger Lösung in 96 gew.-%iger Schwefelsäure bei 25 °C zu bestimmende Viskositätszahl im Bereich von 80 bis 180 ml/g, besonders bevorzugt im Bereich von 85 bis 160 ml/g und ganz besonders bevorzugt im Bereich von 90 bis 140 ml/g. Erfindungsgemäß bevorzugt einzusetzendes Polyamid 6 ist beispielswiese als Durethan® B26 bei der Lanxess Deutschland GmbH, Köln erhältlich.

Die Erfindung betrifft deshalb vorzugsweise einen Mehrschichtverbundwerkstoff, umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in **Polyamid 6** basiertem Kunststoff (5) eingebettet sind,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
   und die Orientierung einer Faserverbundwerkstofflage (2) oder (3) durch die Orientierung des die Endlosfasern enthaltenden textilen Halbzeugs festgelegt wird.

Besonders bevorzugt betrifft die vorliegende Erfindung einen Mehrschichtverbundwerkstoff, umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in Polyamid 6 basiertem Kunststoff (5) eingebettet sind,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird, und das das Polyamid 6 eine nach **ISO 307** zu bestimmende Viskositätszahl im Bereich von 80 bis 180 ml/g, besonders bevorzugt im Bereich von 85 bis 160 ml/g und ganz besonders bevorzugt im Bereich von 90 bis 140 ml/g, aufweist.

Bevorzugt weist ein erfindungsgemäß einzusetzendes Polyamid 66 [CAS Nr. 32131-17-2] eine nach **ISO 307** in 0,5 gew.-%iger Lösung in 96 gew.-%iger Schwefelsäure bei 25 °C zu bestimmende Viskositätszahl im Bereich von 80 bis 180 ml/g auf, ganz besonders bevorzugt eine Viskositätszahl im Bereich von 85 bis 160 ml/g, insbesondere bevorzugt im Bereich von 90 bis 140 ml/g. Erfindungsgemäß bevorzugt einzusetzendes Polyamid 66 ist beispielsweise als Ultramid® A24E01 bei der BASF SE, Ludwigshafen, erhältlich.

Die Erfindung betrifft deshalb vorzugsweise zudem einen Mehrschichtverbundwerkstoff, umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in Polyamid 66 basiertem Kunststoff (5) eingebettet sind,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
   und die Orientierung einer Faserverbundwerkstofflage (2) oder (3) durch die Orientierung des die Endlosfasern enthaltenden textilen Halbzeugs festgelegt wird.

Besonders bevorzugt betrifft die vorliegende Erfindung zudem einen Mehrschichtverbundwerkstoff, umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in Polyamid 66 basiertem Kunststoff (5) eingebettet sind,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird, und das Polyamid 66 eine nach **ISO 307** zu bestimmende Viskositätszahl im Bereich von 80 bis 180 ml/g, besonders bevorzugt im Bereich von 85 bis 160 ml/g und ganz besonders bevorzugt im Bereich von 90 bis 140 ml/g, aufweist.

Dem als Matrixpolymer einzusetzenden Polyamid kann auch im Gemisch mit wenigstens einem anderen Polyamid, als Copolyamid und/oder wenigstens einem anderen Polymer eingesetzt werden. Bevorzugte andere Polymere werden ausgewählt aus der Gruppe Polyethylen, Polypropylen und Acrylnitril-Butadien-Styrol-Copolymerisat (ABS). Im Falle des Einsatzes wenigstens eines weiteren Polyamids oder wenigstens eines anderen Polymers erfolgt dieser vorzugsweise oder gegebenenfalls unter Einsatz wenigstens eines Kompatibilisators.

Dem als Matrixpolymer einzusetzenden Polyamid können übliche Additive, vorzugsweise dem Fachmann bekannte Antioxidantien, Thermostabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Schlagzähmodifikatoren, Gleit- und/oder Entformungsmittel, Komponenten zur Verringerung der Wasseraufnahme, Fließhilfsmittel oder Elastomermodifikatoren, kettenverlängernd wirkende Additive, Farbmittel oder Laserabsorber, die dem Polyamid bereits in der Schmelze zugemischt werden. Die Additive können alleine oder in Mischung bzw. in Form von Masterbatchen eingesetzt werden.

Flammschutzmittel im Sinne der vorliegenden Erfindung sind vorzugsweise mineralische Flammschutzmittel, stickstoffhaltige Flammschutzmittel oder phosphorhaltige Flammschutzmittel.

Unter den mineralischen Flammschutzmitteln ist Magnesiumhydroxid besonders bevorzugt. Magnesiumhydroxid [CAS Nr. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Eine Schlichte fördert qualitätsbeeinflussend den mechanischen Verbund zwischen Matrixpolymer und der mit Schlichte zu versehenden Komponente. Vorzugsweise wird das als mineralisches Flammschutzmittel vorzugsweise einzusetzende Magnesiumhydroxid mit Schlichten auf Basis von Stearaten oder Aminosiloxanen, besonders bevorzugt mit Aminosiloxanen versehen. Vorzugsweise als mineralisches Flammschutzmittel einzusetzendes Magnesiumhydroxid hat eine mittels Laserdiffraktometrie gemäß **ISO 13320** zu bestimmende mittlere Teilchengröße d50 im Bereich von 0,5 µm bis 6 µm, wobei ein d50 im Bereich von 0,7 µm bis 3,8 µm bevorzugt und ein d50 im Bereich von 1,0 µm bis 2,6 µm besonders bevorzugt ist.

Erfindungsgemäß als mineralisches Flammschutzmittel geeignete Magnesiumhydroxidtypen sind beispielsweise Magnifin® H5IV der Martinswerk GmbH, Bergheim, Deutschland oder Hidromag® Q2015 TC der Firma Penoles, Mexiko-Stadt, Mexico.

Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate (DE-A 4 236 122) eingesetzt werden.

In Frage kommen ferner Flammschutzmittelsynergisten aus der Gruppe der sauerstoffstickstoff- oder schwefelhaltigen Metallverbindungen. Bevorzugt sind dabei zinkfreie Verbindungen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer bevorzugten Ausführungsform können zinkhaltige Verbindungen als Flammschutzmittel eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte phosphorhaltige Flammschutzmittel sind organische Metallphosphinate, Aluminiumsalze der Phosphonsäure, roter Phosphor, anorganische Metallhypophosphite, Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melamin-poly(aluminiumphosphat), Melamin-poly(zinkphosphat) oder Phenoxyphosphazenoligomere und deren Mischungen.

Ein bevorzugtes organisches Metallphosphinat ist Aluminium-tris(diethylphosphinat). Ein bevorzugtes anorganisches Metallhypophosphit ist Aluminiumhypophosphit.

Weitere bevorzugt einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die Flammschutzmittel können in Reinform, sowie über Masterbatche oder Kompaktate dem Polyamid zugesetzt werden.

In einer weiteren bevorzugten Ausführungsform können als Flammschutzmittel halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten eingesetzt werden können, wobei unter den halogenhaltigen Flammschutzmitteln bromiertes Polystyrol besonders bevorzugt ist. Bromiertes Polystyrol wird dabei bevorzugt zu 10 - 30 Gew.-%, besonders bevorzugt zu 15 - 25 Gew.% eingesetzt, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren bevorzugten Ausführungsform können als Flammschutzmittelsynergisten aber auch Antimontrioxid oder Antimonpentoxid eingesetzt werden.

Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Unter den einzusetzenden Flammschutzmitteln sind Aluminium-tris(diethylphosphinat)] [CAS Nr. 225789-38-8] sowie die Kombination aus Aluminium-tris(diethylphosphinat) und Melaminpolyphosphat oder die Kombination aus Aluminium-tris(diethylphosphinat) und mindestens einem Aluminiumsalz der Phosphonsäure ganz besonders bevorzugt, wobei letztere Kombination insbesondere bevorzugt ist.

Im Falle der Kombinationen aus Aluminium-tris(diethylphosphinat) und Melaminpolyphosphat bzw. aus Aluminium-tris(diethylphosphinat) und mindestens einem Aluminiumsalz der Phosphonsäure liegt der Anteil an Aluminium-tris(diethylphosphinat) bevorzugt im Bereich von 40 bis 90 Gewichtsteilen, besonders bevorzugt im Bereich von 50 bis 80 Gewichtsteilen, ganz besonders bevorzugt im Bereich von 60 bis 70 Gewichtsteilen, jeweils bezogen auf 100 Gewichtsteile der Kombination aus Aluminium-tris(diethylphosphinat) und Melaminpolyphosphat bzw. der Kombination aus Aluminium-tris(diethylphosphinat) und mindestens einem Aluminiumsalz der Phosphonsäure.

Als Flammschutzmittel einzusetzendes Aluminium-tris(diethylphosphinat) ist dem Fachmann als Exolit® OP1230 oder Exolit® OP1240 der Fa. Clariant International Ltd. Muttenz, Schweiz, bekannt. Melaminpolyphosphat ist in diversen Produktqualitäten kommerziell verfügbar. Beispiele hierfür sind z.B. Melapur® 200/70 der Fa. BASF, Ludwigshafen, Deutschland sowie Budit® 3141 der Fa. Budenheim, Budenheim, Deutschland.

Bevorzugte Aluminiumsalze der Phosphonsäure sind ausgewählt aus der Gruppe
primäres Aluminiumphosphonat [Al(H₂PO₃)₃],
basisches Aluminiumphosphonat [Al(OPH)H₂PO₃)₂·2H₂O],
Al₂(HPO₃)₃·x Al₂O₃·nH₂O der Formel (I) mit x im Bereich von 2,27 bis 1 und n im Bereich von 0 bis 4,
Al₂(HPO₃)₃ · (H₂O)_{q} der Formel (II) mit q im Bereich von 0 bis 4, insbesondere Aluminiumphosphonattetrahydrat [Al₂(HPO₃)₃·4H₂O] oder sekundäres Aluminiumphosphonat [Al₂(HPO₃)₃],
Al₂M_{z}(HPO₃)_{y}(OH)ᵥ · (H₂O)_{w} der Formel (III), worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und
Al₂(HPO₃)ᵤ(H₂PO₃)ₜ · (H₂O)ₛ der Formel (IV), worin u im Bereich von 2 bis 2,99, t im Bereich von 2 bis 0,01 und s im Bereich von 0 bis 4 liegt,
wobei in Formel (III) z, y und v sowie in Formel (IV) u und t nur solche Zahlen annehmen können, dass das entsprechende Aluminiumsalz der Phosphonsäure als Ganzes ungeladen ist.

Bevorzugte Alkalimetalle M in Formel (III) sind Natrium und Kalium.

Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe
primäres Aluminiumphosphonat [Al(H₂PO₃)₃],
sekundäres Aluminiumphosphonat [Al₂(HPO₃)₃],
basisches Aluminiumphosphonat [Al(OPH)H₂PO₃)₂·2H₂O],
Aluminiumphosphonattetrahydrat [Al₂(HPO₃)₃·4H₂O] und
Al₂(HPO₃)₃·x Al₂O₃·n H₂O mit x im Bereich von 2,27 bis 1 und n im Bereich von 0 bis 4.

Ganz besonders bevorzugt sind sekundäres Aluminiumphosphonat Al₂(HPO₃)₃ [CAS Nr. 71449-76-8] und sekundäres Aluminiumphosphonattetrahydrat Al₂(HPO₃)₃·4H₂O [CAS Nr. 156024-71-4], insbesondere bevorzugt ist sekundäres Aluminiumphosphonat Al₂(HPO₃)₃.

Die Herstellung dieser als Flammschutzmittel bevorzugt einzusetzender Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchlorid oder Aluminiumhydroxid, mit einer Phosphorquelle, bevorzugt Phosphonsäure, Ammoniumphosphonat, Alkaliphosphonat, und wahlweise mit einem Templat in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder unter Rückfluss erhitzt, abfiltriert gewaschen und getrocknet. Bevorzugte Template dabei sind 1,6 Hexandiamin, Guanidincarbonat oder Ammoniak. Bevorzugtes Lösungsmittel ist Wasser.

Bevorzugte **Thermostabilisatoren** sind sterisch gehinderte Phenole, insbesondere solche enthaltend mindestens eine 2,6-Di-tert.-butylphenyl-Gruppe und/oder 2-tert.-Butyl-6-methylphenyl-Gruppe, ferner Phosphite, Hypophosphite, insbesondere Natriumhypophosphit NaH₂PO₂ Hydrochinone, aromatische sekundäre Amine, substituierte Resorcine, Salicylate, Benzotriazole und Benzophenone, 3,3'-Thiodipropionsäureester sowie verschieden substituierte Vertreter dieser Gruppen oder deren Mischungen.

In einer Ausführungsform können als Thermostabilisatoren auch Kupfersalze, vorzugsweise in Kombination mit Natriumhypophosphit NaH₂PO₂ eingesetzt werden. Bevorzugt wird als Kupfersalz Kupfer(I)iodid [CAS Nr. 7681-65-4] und/oder Kupfer(triphenylphosphino)iodid [CAS Nr. 47107-74-4] eingesetzt. Vorzugsweise werden die Kupfersalze in Kombination mit Natriumhypophosphit NaH₂PO₂ oder mit wenigstens einem Alkaliiodid eingesetzt. Bevorzugtes Alkaliiodid ist Kaliumiodid [CAS Nr. 7681-11-0].

Vorzugsweise werden Thermostabilisatoren zu 0,01 bis 2 Massenanteilen, besonders bevorzugt zu 0,05 bis 1 Massenanteilen, jeweils bezogen auf 100 Massenanteile Polyamid eingesetzt.

Als Additiv einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt.

Als Additiv einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile Polyamid eingesetzt.

Als Additiv einzusetzende **Farbmittel** werden bevorzugt anorganische Pigmente eingesetzt, besonders bevorzugt Ultramarinblau, Bismutvanadat [CAS Nr. 14059-33-7], Eisenoxid [CAS Nr. 1309-37-1], Titandioxid [CAS Nr. 13463-67-7 (Rutil) oder CAS Nr. 1317-70-0 (Anatas)], Bariumsulfat [CAS Nr. 7727-43-7], Zinksulfid [CAS Nr. 1314-98-3] oder Zinn-Titan-Zinkoxide [CAS Nr. 923954-49-8], insbesondere bevorzugt Bariumsulfat.

Als Additiv einzusetzende **Farbmittel** werden in einer Ausführungsform bevorzugt organische Farbmittel eingesetzt, besonders bevorzugt Phthalocyanine, Chinacridone, Benzimidazole, insbesondere Ni-2-hydroxy-napthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0].

Die Aufzählung als Additiv einzusetzender anorganischer oder organischer Farbmittel ist nicht abschließend.

In einer Ausführungsform kann, soweit es der Bedarf erfordert als Farbmittel auch Ruß oder Nigrosin eingesetzt werden.

In einer bevorzugten Ausführungsform wird als Farbmittel Titanweiß, auch als Pigment White 6 oder CI 77891 bezeichnet, eingesetzt.

Als Additiv einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Additiv einzusetzende **Fließhilfsmittel** werden bevorzugt Copolymerisate aus mindestens einem α-Olefin mit mindestens einem Methacrylsäurester oder Acrylsäureester eines aliphatischen Alkohols eingesetzt. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäß vor thermischem Abbau zu bewahrenden Polymerzusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen **ISO 1133** oder **ASTM D 1238.** Insbesondere bevorzugt wird als Fließhilfsmittel ein Copolymerisat aus Ethen und Acrylsäure-(2-ethyl)-hexylester mit MFI 550 eingesetzt, bekannt als Lotryl® 37EH550.

Als Additiv einzusetzende **kettenverlängernde Additive** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8] und/oder epoxidiertes Leinöl.

Bevorzugt als Additiv einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Additiv einzusetzende **Elastomermodifikatoren E** umfassen u.a. ein oder mehrere Pfropfpolymerisate von
E.1 5 bis 95 Gew.-%, vorzugsweise 30 bis 90 Gew.-%, wenigstens eines Vinylmonomeren und
E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Gewichtsprozente sich auf 100 Gew.-% Elastomermodifikator beziehen.

Die Pfropfgrundlage E.2 hat im allgemeinen eine mittels Laserdiffraktometrie gemäß **ISO 13320** zu bestimmende mittlere Teilchengröße d50-Wert im Bereich von 0,05 bis 10 µm, vorzugsweise im Bereich von 0,1 bis 5 µm, besonders bevorzugt im Bereich von 0,2 bis 1 µm.

Monomere zu E.1 sind vorzugsweise Gemische aus
E.1.1 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-(C₁-C₈)-Alkylester, insbesondere. Methylmethacrylat, Ethylmethacrylat) und
E.1.2 1 bis 50 Gew.-% Vinylcyanide, insbesondere ungesättigte Nitrile wie Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, insbesondere Maleinsäureanhydrid oder N-Phenyl-Maleinimid, wobei die Gewichtsprozente sich auf 100 Gew.-% Elastomermodifikator beziehen.

Bevorzugte Monomere E.1.1 sind auszuwählen aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat. Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 277 - 295 beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die als Additiv einzusetzenden Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, vorzugsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland, Michigan, USA, besonders bevorzugt.

Zur Vernetzung können alternativ zu den ethylenisch ungesättigten Monomeren Monomere mit mehr als einer polymerisierbaren Doppelbindung copolymerisiert werden. Bevorzugte vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Besonders bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Ganz besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere bevorzugt geeignete Pfropfgrundlagen gemäß E.2 sind Silikonkautschuke mit pfropfaktiven Stellen, wie sie in den DE-A 3 704 657**,** DE-A 3 704 655**,** DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Bevorzugt als Schale einzusetzendes Styrol-Acrylnitril ist Metablen® SRK200. Bevorzugt als Schale einzusetzendes Methylmethacrylat ist Metablen® S2001 oder Metablen® S2030 oder Metablen® SX-005. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10 °C, vorzugsweise < 0 °C, besonders bevorzugt < -20 °C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Als Additiv einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen im Bereich von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Additiv einzusetzende Gleit- und/oder Entformungsmittel sind auszuwählen aus der Gruppe Pentaerythritoltetrastearat [CAS Nr. 115-83-3], Ethylen-bis-stearylamid, Calciumstearat und Ethylenglycoldimontanat. Insbesondere bevorzugt wird Calciumstearat [CAS Nr. 1592-23-0] oder Ethylen-bis-stearylamid [CAS Nr. 110-30-5] eingesetzt. Insbesondere besonders bevorzugt wird Ethylen-bis-stearylamid (Loxiol® EBS von Emery Oleochemicals) eingesetzt.

Als Additiv einzusetzende **Hydrolysestabilisatoren bzw. Komponenten zur Verringerung der Wasseraufnahme werden** bevorzugt Polyester eingesetzt, wobei Polybutylenterepthalat und/oder Polyethylenterephthalat besonders bevorzugt sind und Polyethylenterephthalat ganz besonders bevorzugt ist. Die Polyester werden dabei bevorzugt in Konzentrationen von 5 bis 20 Gew.-% und besonders bevorzugt in Konzentrationen von 7 bis 15 Gew-% eingesetzt, jeweils bezogen auf die gesamte Polymerzusammensetzung und mit der Maßgabe, dass die Summe aller Gewichtsprozente der Polymerzusammensetzung stets 100 Gew.-% ergibt.

Als Additiv einzusetzende **Laserabsorber** werden ausgewählt aus der Gruppe Zinnoxid, Zinnorthophosphat, Bariumtitanat, Aluminiumoxid, Kupferhydroxyphosphat, Kupferorthophosphat, Kaliumkupferdiphosphat, Kupferhydroxid, Bismuttrioxid und Antrachinon. Besonders bevorzugt ist Zinnoxid.

In einer alternativen Ausführungsform kann als Laserabsorber aber auch Antimonzinnoxid, Antimontrioxid oder Antimonpentoxid eingesetzt werden.

Der Laserabsorber kann direkt als Pulver oder in Form von Masterbatchen eingesetzt werden. Bevorzugte Masterbatche sind solche auf Basis von Polyamid und/oder Polyolefinen, bevorzugt Polyethylen. Ganz besonders bevorzugt wird der Laserabsorber in Form eines Polyamid 6-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge im Bereich von 157 nm bis 10,6 µm. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und CO₂-Laser eingesetzt.

### Faserverbundwerkstoff

Ein Mehrschichtverbundwerkstoff im Sinne der vorliegenden Erfindung weist mindestens drei übereinanderliegende Faserverbundwerkstofflagen auf.

Unter Faserverbundwerkstoff wird erfindungsgemäß ein Werkstoff verstanden, der Endlosfasern enthält, welche in eine Kunststoffmatrix eingebettet sind. Gemäß einer bevorzugten Ausführungsform der Erfindung weist der Mehrschichtverbundwerkstoff mindestens drei übereinanderliegende und miteinander flächig verbundene Faserverbundwerkstofflagen auf.

Die erfindungsgemäßen Faserverbundwerkstofflagen des Mehrschichtverbundwerkstoffs weisen Endlosfasern auf, die innerhalb der jeweiligen Lage beliebig ausgerichtet sind und in Polyamid basiertem Kunststoff eingebettet sind. Die Endlosfasern erstrecken sich dabei insbesondere im Wesentlichen über die gesamte Länge der Lage einer erfindungsgemäß einzusetzenden Faserverbundwerkstofflage.

Gemäß einer besonderen Ausführungsform der Erfindung sind alle Faserverbundwerkstofflagen des erfindungsgemäßen Mehrschichtverbundwerkstoffs flächig miteinander verbunden, wobei die Endlosfasern innerhalb einer jeweiligen Faserverbundwerkstofflage beliebig ausgerichtet sind und in Polyamid basiertem Kunststoff eingebettet sind.

Optional können weitere Materiallagen zwischen den Faserverbundwerkstofflagen angeordnet sein. Neben den Faserverbundwerkstofflagen kann in einer bevorzugten Ausführungsform der erfindungsgemäße Mehrschichtverbundwerkstoff wenigstens eine weitere Materiallage zwischen den Faserverbundwerkstofflagen enthalten.

Vorzugsweise sind solche weiteren Materiallagen aus Kunststoff, der gleich oder verschieden von dem Kunststoff in den Faserverbundwerkstofflagen ist. Diese weiteren Materiallagen aus Kunststoff können insbesondere auch Füllstoffe, die von den erfindungsgemäß in den Faserverbundwerkstofflagen einzusetzenden Endlosfasern verschieden sind, enthalten. Solche weiteren alternative Materiallagen sind vorzugsweise Klebstoffschichten, Gewebelagen oder Vlieslagen. Diese weiteren Materiallagen können vorzugsweise zwischen innenliegenden Faserverbundwerkstofflagen, zwischen innenliegenden Faserverbundwerkstofflagen und außenliegenden Faserverbundwerkstofflagen oder zwischen mehreren innenliegenden Faserverbundwerkstofflagen eingesetzt werden.

In einer Ausführungsform können diese weiteren Materiallagen vorzugsweise in Form von Oberflächenvergütungslagen, Furnieren, Verblendungen oder Lackschichten, zusätzlich oder alternativ auf einer oder auf beiden außenliegenden Faserverbundwerkstofflagen eingesetzt werden.

In einer Ausführungsform der vorliegenden Erfindung wird nur auf einer außenliegenden Faserverbundwerkstofflage wenigstens eine weitere Materiallage aufgebracht. Vorzugsweise sind solche weiteren Materiallagen von den innenliegenden und außenliegenden Faserverbundwerkstofflagen verschiedene Faserverbundwerkstofflagen, Kunststofflagen oder Lackschichten, die keine unidirektional ausgerichteten Endlosfasern enthalten. In einer Ausführungsform handelt es sich bei solchen weiteren Materiallagen auch nicht um Faserverbundwerkstofflagen, Kunststofflagen oder Lackschichten auf Basis von Polyamid.

Vorzugsweise sind die außenliegenden Faserverbundwerkstofflagen und die mindestens eine innenliegende Faserverbundwerkstofflage jedoch derart miteinander verbunden, dass keine alternativen Materiallagen dazwischen angeordnet sind.

Praktische Versuche im Rahmen der vorliegenden Erfindung haben gezeigt, dass ein erfindungsgemäßer Mehrschichtverbundwerkstoff bereits vorteilhafte mechanische Eigenschaften ohne solche weiteren, zwischenliegenden Materiallagen aufweist.

Gemäß einer besonders bevorzugten Ausführungsform enthalten alle Faserverbundwerkstofflagen eines erfindungsgemäßen Mehrschichtverbundwerkstoffs unidirektional ausgerichtete Endlosfasern, die in Polyamid basiertem Kunststoff eingebettet sind.

Der erfindungsgemäße Mehrschichtverbundwerkstoff kann in einer bevorzugten Ausführungsform auch ausschließlich aus erfindungsgemäß einzusetzenden Endlosfasern aufweisenden Faserverbundwerkstofflagen bestehen, wobei die Endlosfasern innerhalb der jeweiligen Faserverbundwerkstofflage beliebig ausgerichtet und in Polyamid basiertem Kunststoff eingebettet sind. In einer weiteren bevorzugten Ausführungsform weist ein erfindungsgemäßer Mehrschichtverbundwerkstoff dieser Art noch auf einer oder beiden der außenliegenden Faserverbundwerkstofflagen eine oder mehrere Oberflächenvergütungslagen auf, vorzugsweise in Form wenigstens einer Verblendung, wenigstens eines Furniers (Veneer) oder wenigstens einer Lackschicht.

Es hat sich im Rahmen der vorliegenden Erfindung als vorteilhaft erwiesen, wenn der erfindungsgemäße Mehrschichtverbundwerkstoff vorzugsweise ein bis sechs, besonders bevorzugt ein bis vier, ganz besonders bevorzugt ein bis zwei, innenliegende Faserverbundwerkstofflagen umfasst. Der erfindungsgemäße Mehrschichtverbundwerkstoff kann aber auch keine oder mehr als zwölf, insbesondere dreizehn, vierzehn, fünfzehn oder mehr als sechzehn innenliegende Faserverbundwerkstofflagen umfassen.

Die einzelnen Faserverbundwerkstofflagen können im Wesentlichen gleich oder unterschiedlich aufgebaut und/oder orientiert sein, solange insgesamt eine Mittensymmetrie über die Dicke des Mehrschichtverbundwerkstoffs eingehalten wird. Unter **Mittensymmetrie** versteht ein Fachmann das Vorliegen einer Symmetrieebene parallel zu den einzelnen Faserverbundwerkstofflagen, die sich im Querschnitt genau in der Mitte des Gesamtaufbaus des erfindungsgemäßen Mehrschichtverbundwerkstoffs befindet, d.h. an der die obere Hälfte des Gesamtaufbaus gespiegelt die untere Hälfte ergibt, bzw. umgekehrt.

Unter einem im Wesentlichen gleichen Aufbau der Faserverbundwerkstofflagen wird im Rahmen der Erfindung verstanden, dass mindestens ein Merkmal aus der Gruppe chemische Zusammensetzung, Faservolumengehalt und Schichtdicke gleich ist.

Unter chemischer Zusammensetzung wird die chemische Zusammensetzung der Kunststoffmatrix des Faserverbundwerkstoffs und/oder die chemische Zusammensetzung der die Endlosfasern einbettenden Matrix verstanden.

Gemäß einer bevorzugten Ausführungsform der Erfindung sind die außenliegenden Faserverbundwerkstofflagen in Bezug auf ihre chemische Zusammensetzung, ihren Faservolumengehalt und ihre Schichtdicke im Wesentlichen gleich aufgebaut.

Als außenliegende Faserverbundwerkstofflage wird erfindungsgemäß die jeweils relativ zu den anderen Faserverbundwerkstofflagen des Mehrschichtverbundwerkstoffs am weitesten außen liegende Faserverbundwerkstofflage verstanden. Die Endlosfasern in einer außenliegenden Faserverbundwerkstofflage sind vorzugsweise unidirektional ausgerichtet. Vorzugsweise sind die Endlosfasern einer außenliegenden Faserverbundwerkstofflage in Polyamid basiertem Kunststoff eingebettet.

Innenliegende Faserverbundwerkstofflagen im Sinne der Erfindung sind somit alle Faserverbundwerkstofflagen, die sich zwischen den beiden außenliegenden Faserverbundwerkstofflagen befinden.

**Beliebige Orientierung** im Sinne der Erfindung bedeutet, dass die Hauptrichtungen der Endlosfasern in einer Faserverbundwerkstofflage von der Produktionsrichtung des eingesetzten textilen Halbzeugs, insbesondere in Richtung des Kettfadens bei Geweben, in der Ebene im Bereich von >0° und <90° abweichen bzw. abweichen können.

Mit **unidirektional** ist im Rahmen der vorliegenden Erfindung im Wesentlichen gemeint, dass eine Abweichung der auf die zweidimensionale Ebene (Länge • Breite) bezogene Faserlaufrichtung von bis zu 5% möglich ist. Erfindungsgemäß bevorzugt beträgt die Abweichung der Faserlaufrichtung jedoch unter 3%, besonders bevorzugt unter 1%.

Erfindungsgemäß bevorzugt einzusetzende Endlosfasern sind Glasfasern, Kohlenstofffasern, Basaltfasern, Aramidfasern, Liquid-Crystal-Polymer-Fasern, Polyphenylensulfidfasern, Polyetherketonfasern, Polyetheretherketonfasern, Polyetherimidfasern und deren Mischungen. Als besonders bevorzugt hat sich der Einsatz von Glasfasern und/oder Kohlenstofffasern, insbesondere von Glasfasern erwiesen.

Gemäß einer besonders bevorzugten Ausführungsform der Erfindung werden als Endlosfasern Kohlenstofffasern in den außenliegenden Faserverbundwerkstofflagen eingesetzt.

Für bestimmte bevorzugte Ausführungsformen der Erfindung werden Endlosfasern, insbesondere Kohlenstoff basierte Endlosfasern, mit einem E-Modul von größer 220 GPa, bevorzugt größer 225 GPa, besonders bevorzugt von 230 GPa oder mehr eingesetzt. Entsprechende Kohlenstoff basierte Endlosfasern sind beispielsweise unter der Bezeichnung Torayca® von der Firma Toray Carbon Fiber Europe im Handel erhältlich. Praktische Versuche haben gezeigt, dass sich diese Kohlenstofffasern durch eine besonders gute Webbarkeit, d.h. Verarbeitbarkeit in Herstellungsprozessen für textile Halbzeuge, und somit für die Verarbeitung zu einer erfindungsgemäßen Faserverbundwerkstofflage auszeichnen.

Gemäß einer besonderen Ausführungsform der Erfindung sind die mindestens drei Faserverbundwerkstofflagen innerhalb des erfindungsgemäßen Mehrschichtfaserverbundwerkstoffs im Wesentlichen symmetrisch angeordnet. Im Falle dieser besonderen Ausführungsform sind die beiden außenliegenden Faserverbundwerkstofflagen in Bezug auf wenigstens ein Merkmal aus der Gruppe chemische Zusammensetzung, Faservolumengehalt oder Schichtdicke im Wesentlichen gleich aufgebaut.

**Symmetrisch** im Sinne der Erfindung bedeutet im Wesentlichen, dass die Faserverbundwerkstofflagen des Mehrschichtverbundwerkstoffs in Bezug auf eine, auf der Hälfte der durch die beiden außenliegenden Faserverbundwerkstofflagen nach außen begrenzten Dicke des Mehrschichtverbundwerkstoffs, parallel zu den Faserverbundwerkstofflagen verlaufenden Spiegelebene in Bezug auf mindestens ein Merkmal, vorzugsweise alle Merkmale aus der Gruppe chemische Zusammensetzung, Faservolumengehalt und Schichtdicke, im Wesentlichen gleich aufgebaut sind.

Gemäß einer bevorzugten Ausführungsform der Erfindung sind die mindestens drei Faserverbundwerkstofflagen symmetrisch angeordnet, wobei die beiden außenliegenden Faserverbundwerkstofflagen in Bezug auf alle Merkmale aus der Gruppe chemische Zusammensetzung, Faservolumengehalt und Schichtdicke im Wesentlichen gleich aufgebaut sind.

Gemäß einer weiteren besonders bevorzugten Ausführungsform der Erfindung sind die mindestens drei Faserverbundwerkstofflagen symmetrisch angeordnet, wobei die beiden außenliegenden Faserverbundwerkstofflagen in Bezug auf alle Merkmale aus der Gruppe chemische Zusammensetzung, Faservolumengehalt und Schichtdicke gleich aufgebaut sind.

Gemäß einer bevorzugten Ausführungsform der Erfindung weist ein erfindungsgemäßer Mehrschichtverbundwerkstoff eine Gesamtdicke im Bereich von 0,3 bis 5 mm, vorzugsweise im Bereich von 0,3 bis 3 mm, insbesondere im Bereich von 0,3 bis 2,5 mm auf. Praktische Versuche haben gezeigt, dass es mit dem erfindungsgemäßen Mehrschichtverbundwerkstoff möglich ist, selbst bei diesen geringen Dicken ausgesprochen gute mechanische Eigenschaften zu erzielen.

Dabei hat es sich als besonders vorteilhaft erwiesen, wenn die Summe aller innenliegenden Faserverbundwerkstofflagen eine Gesamtdicke im Bereich von 0,05 bis 4,6 mm, bevorzugt im Bereich von 0,1 bis 2,6 mm, besonders bevorzugt im Bereich von 0,4 bis 1,2 mm, aufweist.

Vorteilhaft im Rahmen der Erfindung ist es ferner, wenn die Dicke jeder einzelnen der beiden außenliegenden Faserverbundwerkstofflagen jeweils im Bereich von 0,02 bis 1 mm, bevorzugt im Bereich von 0,1 bis 0,5 mm, besonders bevorzugt im Bereich von 0,15 bis 0,3 mm liegt.

In Bezug auf die mechanischen Eigenschaften wurde im Rahmen der Erfindung überraschend festgestellt, dass sich besonders gute Ergebnisse einstellen, wenn der erfindungsgemäße Mehrschichtverbundwerkstoff ein Dickenverhältnis der Summe der beiden außenliegenden Faserverbundwerkstofflagen zur Summe aller innenliegenden Faserverbundwerkstofflagen von 1 bis 2,5 aufweist.

Überraschenderweise wurde festgestellt, dass ein Polyamid basierter Mehrschichtverbundwerkstoff, der dieses vorgenannte Dickenverhältnis der Summe der beiden außenliegenden Faserverbundwerkstofflagen zu der Summe aller innenliegenden Faserverbundwerkstofflagen im Vergleich zu einem Polyamid basierten Mehrschichtverbundwerkstoff, der dieses Dickenverhältnis nicht aufweist, deutlich verbesserte mechanische Eigenschaften zeigt. So ist es insbesondere möglich, mit dem vorgenannten Dickenverhältnis Polyamid basierte Mehrschichtverbundwerkstoffe zu erhalten, die bei Messungen gemäß der im experimentellen Teil beschriebenen Methode sowohl in 0° als auch in 90° ein für die weitere Verwendung ausreichend und insbesondere um weniger als 5% voneinander abweichende Biege-E-Moduln aufweisen.

Gemäß einer besonderen Ausführungsform der Erfindung weist eine Faserverbundwerkstofflage einen Faservolumengehalt im Bereich von 30 Vol.-% bis 80 Vol.-%, vorzugsweise im Bereich von 35 Vol.-% bis 65 Vol.-%, besonders bevorzugt im Bereich von 37 Vol.-% bis 52 Vol.-% auf. Ausprüfungen im Rahmen der vorliegenden Erfindung zeigten, dass bei einem Faservolumengehalt von weniger als 30 Vol.-% die mechanischen Eigenschaften des resultierenden Polyamid basierten Faserverbundwerkstoffs bei punktueller Belastung oftmals nicht optimal sind, d.h. der Faserverbundwerkstoff kann einer punktuellen Belastung nicht genügend standhalten und teils sogar durchstoßen werden. Die Ausprüfungen im Rahmen der vorliegenden Erfindung zeigten ferner, dass ein Faservolumengehalt von über 80 Vol.-% ebenfalls zu einer Verschlechterung der mechanischen Eigenschaften des Polyamid basierten Faserverbundwerkstoffs führte. Vermutlich werden die Fasern bei derartig hohem Faservolumengehalt bei der Imprägnierung nicht mehr ausreichend benetzt, was zu einer Zunahme an Lufteinschlüssen und zu einem vermehrten Auftreten von Oberflächendefekten im Mehrschichtverbundwerkstoff führt.

Gemäß einer Ausführungsform der Erfindung weisen die außenliegenden Faserverbundwerkstofflagen vorzugsweise einen Faservolumengehalt von höchstens 60 Vol.-%, besonders bevorzugt von höchstens 55 Vol.-%, insbesondere bevorzugt von höchstens 51 Vol.-% auf.

Gemäß einer Ausführungsform der Erfindung weisen die außenliegenden Faserverbundwerkstofflagen vorzugsweise einen Faservolumengehalt von mindestens 30 Vol.-%, besonders bevorzugt von mindestens 35 Vol.-%, insbesondere bevorzugt von mindestens 37 Vol.-% auf.

Die innenliegenden Faserverbundwerkstofflagen weisen vorzugsweise einen Faservolumengehalt im Bereich von 30 Vol.-% bis 80 Vol.-%, besonders bevorzugt im Bereich von 35 Vol.-% bis 65 Vol.-%, ganz besonders bevorzugt im Bereich von 37 Vol.-% bis 52 Vol.-% bezogen auf das Gesamtvolumen der Faserverbundwerkstofflagen auf.

Unter **Vol.-%** wird im Rahmen der vorliegenden Erfindung der Volumenanteil (% v/v) bezogen auf das Gesamtvolumen der jeweiligen Faserverbundwerkstofflage verstanden.

Als besonders praxisgerecht hat es sich erwiesen, wenn die innenliegenden Faserverbundwerkstofflagen gleich orientiert sind und ihre Orientierung relativ zu den außenliegenden Faserverbundwerkstofflagen um 0° rotiert ist. Es ist aber auch denkbar, die innen- liegenden Faserverbundwerkstofflagen relativ zu den außenliegenden Faserverbundwerkstofflagen um 30°, 40°, 50°, 60°, 70° oder 90° zu rotieren. Dabei kann die Orientierung in jedem Fall um ±5°, bevorzugt um ±3°, besonders bevorzugt um ±1° von den genannten Richtwerten abweichen.

Die Faserverbundwerkstofflagen des erfindungsgemäßen Polyamid basierten Mehrschichtverbundwerkstoffs können mit den üblichen dem Fachmann bekannten Verfahren zur Herstellung von Faserverbundwerkstoffen hergestellt werden.

Besonders gute Ergebnisse im Hinblick auf die mechanischen Eigenschaften und die Oberflächenglätte stellen sich ein, wenn folgendes Herstellungsverfahren angewendet wird: Gemäß einer bevorzugten Ausführungsform der Erfindung sind die Faserverbundwerkstofflagen des Mehrschichtverbundwerkstoffs herstellbar durch Auftragen eines Polyamid basierten Kunststoffs auf ein Endlos-Faserband oder Textil unter Druck- und Temperaturbeaufschlagung. Ein derartiges Herstellungsverfahren ist in EP 0131879 A1 oder EP 0212232 A2 beschrieben.

Überraschend wurde gefunden, dass sich die so hergestellten Faserverbundwerkstofflagen sich durch einen besonders geringen Anteil von Lufteinschlüssen und sehr gute mechanische Eigenschaften auszeichnen. Der aus den so hergestellten Faserverbundwerkstofflagen erhältliche erfindungsgemäße Polyamid basierte Mehrschichtverbundwerkstoff weist sehr gute mechanische Eigenschaften, insbesondere im Hinblick auf punktuelle Belastungen, auf.

Bevorzugt weisen die mindestens drei Faserverbundwerkstofflagen des erfindungsgemäßen Mehrschichtverbundwerkstoffs im Wesentlichen keine Hohlräume, insbesondere im Wesentlichen keine Lufteinschlüsse, auf.

**Im Wesentlichen keine Hohlräume** bedeutet gemäß einer Ausführungsform, dass der Hohlraumgehalt der mindestens drei Faserverbundwerkstofflagen des erfindungsgemäßen Polyamid basierten Mehrschichtverbundwerkstoffs unter 2 Vol.-%, insbesondere unter 1 Vol.-%, besonders bevorzugt unter 0,5 Vol.- %, beträgt.

Die Ermittlung des Hohlraumgehalts einer Faserverbundwerkstofflage oder des Mehrschichtverbundwerkstoffs erfolgte im Rahmen der vorliegenden Erfindung nach der Dickendifferenzmethode. Hierbei wird die Schichtdickendifferenz zwischen theoretischer Bauteildicke und der tatsächlichen Bauteildicke bei bekannten Flächengewichten und Dichten von Kunststoff sowie Faser ermittelt. Bei der Berechnung der theoretischen Bauteildicken wird davon ausgegangen, dass keine Hohlräume in dem Faserverbundwerkstoffaufbau vorhanden sind und eine vollständige Benetzung der Fasern mit Polymer vorliegt. Der Bezug der Dickendifferenz auf die tatsächliche Bauteildicke ergibt den prozentualen Hohlraumgehalt. Die Messung der Dicken kann vorzugsweise mit einer Bügelmessschraube erfolgen. Fehlerminimierte Ergebnisse lassen sich bei dieser Methode bevorzugt durch die Ermittlung des Hohlraumgehalts in Bauteilen bestehend aus mehreren Faserverbundwerkstofflagenbevorzugt mehr als 4 Faserverbundwerkstofflagen, besonders bevorzugt mehr als 6 Faserverbundwerkstofflagen und ganz besonders bevorzugt mehr als 8 Faserverbundwerkstofflagen, bestimmen.

Ganz besonders bevorzugt weisen die wenigstens drei Faserverbundwerkstofflagen eines erfindungsgemäßen Polyamid basierten Mehrschichtverbundwerkstoffs keine Hohlräume, insbesondere keine Lufteinschlüsse, auf.

Erfindungsgemäß bevorzugt sind deshalb Mehrschichtverbundwerkstoffe worin
- 3 bis 25 Faserverbundwerkstofflagen, bevorzugt 3 bis 20 Faserverbundwerkstofflagen, besonders bevorzugt 3 bis 18 Faserverbundwerkstofflagen,
- wobei die Faserverbundwerkstofflagen jeweils ein Flächengewicht im Bereich von 5 g/m² bis 3000 g/m², bevorzugt im Bereich von 100 g/m² bis 900 g/m², besonders bevorzugt im Bereich von 150 g/m² bis 750 g/m², aufweisen,
- und die Gesamtheit aller Faserverbundwerkstofflagen mit wenigstens Polyamid basiertem Kunststoff mit einem MVR nach ISO 1133 im Bereich von 1 cm³/10 min bis 100 cm³/10 min imprägniert ist,
- und die außenliegenden Faserverbundwerkstofflagen einen nach DIN 1310 zu bestimmenden Faservolumengehalt von höchstens 60 Vol.%, vorzugsweise von höchstens 55 Vol.-%, insbesondere von höchstens 51 Vol.-% aufweisen,
- und die außenliegenden Faserverbundwerkstofflagen einen nach DIN 1310 zu bestimmenden Faservolumengehalt von wenigstens 30 Vol.-%, vorzugsweise von wenigstens 35 Vol.-%, insbesondere bevorzugt von wenigstens 37 Vol.-% aufweisen,
- und die innenliegenden Faserverbundwerkstofflagen einen nach DIN 1310 zu bestimmenden Faservolumengehalt < 80 Vol.-%, vorzugsweise < 65 Vol.-%, besonders bevorzugt < 52 Vol.-% bezogen auf das Gesamtvolumen der innenliegenden Faserverbundwerkstofflagen aufweisen,
- und die innenliegenden Faserverbundwerkstofflagen einen nach DIN 1310 zu bestimmenden Faservolumengehalt > 30 Vol.-%, vorzugsweise > 35 Vol.-%, besonders bevorzugt von > 37 Vol.-% bezogen auf das Gesamtvolumen der innenliegenden Faserverbundwerkstofflagen aufweisen, und
- und der Mehrschichtverbundwerkstoff einen Hohlraumanteil von weniger als 2 Vol.-%, vorzugsweise weniger als 1 Vol.-%, insbesondere bevorzugt weniger als 0,5 Vol.-%, aufweist,
und die Endlosfasern in Form eines textilen Halbzeugs, vorzugsweise in Form eines balancierten Gewebes, Vlieses oder Fasermatte, vorliegen, wobei die Endlosfasern innerhalb der jeweiligen Faserverbundwerkstofflage beliebig orientiert sind,
mit der Maßgabe, dass
a) bei einer innenliegenden Faserverbundwerkstofflage diese zu den beiden äußeren Faserverbundwerkstofflagen um 0° bis 90° rotiert ist,
b) bei ≥2 innenliegenden Faserverbundwerkstofflagen diese innenliegenden Faserverbundwerkstofflagen im Wesentlichen gleich orientiert sind und ihre Orientierung zu den außenliegenden Faserverbundwerkstofflagen um 0° bis 90° rotiert ist,
und die Orientierung einer Faserverbundwerkstofflage durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet. Erfindungsgemäß besonders bevorzugt sind Mehrschichtverbundwerkstoffe worin zusätzlich die Summe aller innenliegenden Faserverbundwerkstofflagen eine Gesamtdicke im Bereich von 0,05 bis 4,6mm, bevorzugt im Bereich von 0,1 bis 2,6mm, besonders bevorzugt im Bereich von 0,4 bis 2,2mm, aufweist.

Erfindungsgemäß ganz besonders bevorzugt sind Mehrschichtverbundwerkstoffe worin zusätzlich die Dicke jeder einzelnen der beiden außenliegenden Faserverbundwerkstofflagen jeweils 0,02 bis 1mm, bevorzugt jeweils 0,1 bis 0,5mm, besonders bevorzugt jeweils 0,15 bis 0,3mm beträgt.

### Verfahren zur Herstellung einer Faserverbundwerkstofflage

Das bevorzugte Verfahren zur Herstellung einer **Faserverbundwerkstofflage** des erfindungsgemäßen Polyamid basierten Mehrschichtfaserverbundwerkstoffs umfasst insbesondere die folgenden Schritte:
(i) Bereitstellen eines textilen Halbzeugs und Fördern dieses textilen Halbzeugs längs eines Bearbeitungsweges,
(ii) Auftragen des Polyamid basierten Kunststoffs über die gesamte Breite des textilen Halbzeugs auf einer Oberfläche dieses textilen Halbzeugs,
(iii) Zusammenführen der erforderlichen Anzahl von mit Kunststoff beaufschlagten textilen Halbzeuge in übereinanderliegender Form und deren gleichzeitiges Fördern längs eines gemeinsamen Bearbeitungswegs,
(iv) Aufbringen eines Drucks auf die übereinanderliegenden, mit Kunststoff beaufschlagten textilen Halbzeuge senkrecht zur Ebene der textilen Halbzeuge wobei das Druckaufbringen mit mindestens einem Druckstempel bei gleichzeitiger Temperaturbeaufschlagung des Druckstempels mit einer Längsbewegungskomponente in der Bandebene und quer zu einer Textilhalbzeuglagen-Laufrichtung mittels einer statischen beheizten Presse erfolgt, vorzugsweise mittels beheizbarer Intervallheizpresse oder beheizbarer Doppelbandpresse, besonders bevorzugt mittels einer beheizbaren Doppelbandpresse,
(v) gleichzeitiges Halten des mehrlagigen Aufbaus der mit Kunststoff beauftragen Textilhalbzeuglagen innerhalb eines Bearbeitungstemperaturbereiches oberhalb der Kristallitschmelztemperatur des einzusetzenden Kunststoffs, und
(vi) Absenken des Bearbeitungstemperaturbereichs, vorzugsweise vor dem Abschluss der Druckbelastung.

Der Einsatz von Intervallheizpressen, verschiedentlich auch als Intervallheißpressen bezeichnet, in der Fertigung von Composites ist dem Fachmann bekannt aus EP 3257893 A1**.** Doppelbandpressen sind dem Fachmann bekannt aus EP 0131879 A1**.**

Ein Polymerauftrag von Polyamid basiertem Kunststoff mit nachfolgender Druck-/Temperaturbeaufschlagung solange der Druck mit einer Temperatur kombiniert wird, die oberhalb der Kristallitschmelztemperatur des eingesetzten Polyamid basierten Kunststoffs liegt, führt zu einem wirksamen Einarbeiten der Kunststoffschmelze in die gesamte Faservolumenstruktur des textilen Halbzeugs.

Wenn hier von Erhitzen über die Kristallitschmelztemperatur des Kunststoffs oder Halten über der Kristallitschmelztemperatur des Kunststoffs die Rede ist, so ist damit das Erhitzen auf eine Temperatur gemeint, bei der der Kunststoff vollständig geschmolzen vorliegt. Die Glasübergangstemperatur und die Kristallitschmelztemperatur hängen im Wesentlichen von der Struktur des jeweiligen Polymers ab. Hierbei lassen sich verschiedene Faktoren unterscheiden, vor allem die Flexibilität der Hauptkette des Polymers und gegebenenfalls der Einfluss von Seitenketten. Die Schmelzpunkte für die bevorzugt einzusetzenden Polyamide liegen gemäß **https://de.wikipedia.org/wiki/Polyamide** für Polyamid 6 [CAS Nr. 25038-54-4] bei 220°C und für Polyamid 66 [CAS Nr. 32131-17-2] bei 266°C.

Die Messung der Kristallitschmelztemperatur erfolgt im Rahmen der vorliegenden Erfindung mittels der dynamischen Differenzkalorimetrie (DSC). Ein verkapselter Behälter mit der zu untersuchenden Probe und ein zweiter Behälter ohne Inhalt (Referenz) werden einem gleichartigen Temperaturprogramm ausgesetzt. Dabei kommt es infolge der Wärmekapazität der zu untersuchenden Probe und exothermen oder endothermen Prozessen bzw. Phasenänderungen wie Schmelzen oder Verdampfen zu Temperaturänderungen Δ*T* im Vergleich zur leeren Probe (*T*_{Ref}), da thermische Energie in den oder aus dem entsprechenden Prozess fließt. Bei der DSC wird diese Temperaturdifferenz nicht direkt als Messsignal verwendet, sondern auf den Wärmestrom als Messgröße geschlossen. Dafür stehen zwei Verfahren zur Verfügung, die Dynamische Wärmestromdifferenzkalorimetrie und die Dynamische Leistungsdifferenzkalorimetrie.

Bei der Dynamischen Wärmestromdifferenzkalorimetrie nach **DIN 53765** werden die Enthalpieänderungen (Wärmestrom) durch Integration der *ΔT*-*T*_{Ref}-Kurve berechnet. Dabei befinden sich Stellflächen für Probe und Referenz im Ofen auf einer Scheibe (Disk type measuring system), welche eine gute Wärmeleitfähigkeit besitzt und unter welcher die Temperaturfühler sitzen. Wird der Ofen erhitzt, so fließt die Wärme durch die Probe/Referenz in die Scheibe und wird dort mittels der Fühler abgenommen. Sind Probe und Referenz gleich, fließen gleich große Wärmeströme durch die Scheibe. Die Wärmestromdifferenz ist damit null. Verändert sich während der Messung eine Probe, z. B. durch Umwandlung, Schmelzen, Verdampfen, entsteht eine Differenz im Wärmestrom, welche proportional zur Temperaturdifferenz ist (Φ_{FP}-Φ_{FR} ∼ Δ*T* wobei Φ_{FP} der Wärmestrom der Probe und Φ_{FR} der Wärmestrom der Referenz und Δ*T* die Differenz der Temperatur ist).

Bei der Dynamischen Leistungsdifferenzkalorimetrie nach **DIN 51007** werden Probe und Referenztiegel in thermisch isolierte Öfen gebracht und diese so geregelt, dass auf beiden Seiten stets die gleiche Temperatur herrscht. Die dafür notwendige elektrische Leistung wird als Funktion der Temperatur aufgezeichnet.

Vorzugsweise liegt die Temperatur während der Druckbeaufschlagung mit Polyamid basiertem Kunststoff bezogen auf die Kristallitschmelztemperatur im Bereich von +10°C bis +120°C, besonders bevorzugt im Bereich von +20°C bis +100°C, ganz besonders bevorzugt im Bereich von +40°C bis +80°C, insbesondere bevorzugt bei +50°C.

Durch die Längsbewegung während der Druck- / Temperaturbeaufschlagung werden Gasvolumina, die sich noch innerhalb des textilen Halbzeugs befinden, effizient ausgetrieben. Das Verfahren wird vorzugsweise kontinuierlich durchgeführt. Das Halten des mehrlagigen Aufbaus bei einer Temperatur oberhalb der polymerspezifischen Kristallitschmelztemperatur des Polyamid basierten Kunststoffs stellt sicher, dass der Kunststoff nicht unerwünscht vor dem vollständigen Eindringen innerhalb und auf dem textilen Halbzeug erstarrt. Nach dem Durchführen der angegebenen Verfahrensschritte ist der hergestellte, imprägnierte mehrlagige Aufbau definiert abgekühlt. Das textile Halbzeug kann eine Vielzahl von Endlosfasern aufweisen. Aufgrund der Druck-/ Temperaturbeaufschlagung kann eine geringe bis nicht vorhandene Schädigung der Fasern bei guter Kunststoffdurchdringung des textilen Halbzeugs, also bei guter Imprägnierung, realisiert werden.

Besonders bevorzugt wird das Verfahren zur Herstellung einer Faserverbundwerkstofflage eines erfindungsgemäßen Mehrschichtverbundwerkstoffs so geführt, dass das Auftragen des Polyamid basierten Kunststoffs auf das textile Halbzeug erfolgt während das textile Halbzeug unter Normal-Umgebungsdruck gefördert wird. Ein solches Auftragen des Kunststoffs vermeidet eine aufwändige Abdichtung einer unter Druck stehenden Auftragskammer nach außen.

Vorzugsweise liegt der Druck während der Druck-/Temperaturbeaufschlagung im Bereich von 0,01 MPa bis 3 MPa.

### Verfahren zur Herstellung eines Mehrschichtfaserverbundwerkstoffs

Unter dem Zusammenführen der geschichteten Faserverbundwerkstofflagen zum Mehrschichtverbundwerkstoff wird erfindungsgemäß jedes Verfahren verstanden, welches eine körperliche Verbindung der geschichteten Faserverbundwerkstofflagen zur Folge hat.

Die vorliegende Erfindung betrifft deshalb auch ein Verfahren zur Herstellung eines Mehrschichtverbundwerkstoffs, umfassend folgende Schritte:
(I) Bereitstellen wenigstens einer innenliegenden Faserverbundwerkstofflage und zweier außenliegender Faserverbundwerkstofflagen,
(II) Einlegen der wenigstens einen innenliegenden Faserverbundwerkstofflage zwischen die außenliegenden Faserverbundwerkstofflagen,
(III) Verbinden der geschichteten Faserverbundwerkstofflagen, insbesondere mittels Druck und/oder Temperatur durch wenigstens eine statische beheizte Presse, vorzugsweise einer beheizbaren Intervallheizpresse oder beheizbaren Doppelbandpresse, besonders bevorzugt mittels einer beheizbaren Doppelbandpresse,
mit der Maßgabe, dass jede dieser mindestens drei innenliegenden und außenliegenden Faserverbundwerkstofflagen Endlosfasern in Form eines textilen Halbzeugs, vorzugsweise in Form eines balancierten Gewebes, Vlieses oder Fasermatte, enthält, wobei die Endlosfasern innerhalb der jeweiligen Faserverbundwerkstofflage beliebig ausgerichtet sind und in Polyamid basiertem Kunststoff eingebettet sind, wobei
a) bei einer innenliegenden Faserverbundwerkstofflage diese zu den beiden äußeren Faserverbundwerkstofflagen um 0° bis 90° rotiert ist,
b) bei ≥2 innenliegenden Faserverbundwerkstofflagen diese innenliegenden Faserverbundwerkstofflagen im Wesentlichen gleich orientiert sind und ihre Orientierung zu den außenliegenden Faserverbundwerkstofflagen um 0° bis 90° rotiert ist,
und die Orientierung einer Faserverbundwerkstofflage durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.

Gemäß einer bevorzugten Ausführungsform resultiert das Zusammenführen der geschichteten Faserverbundwerkstofflagen in flächig miteinander verbundenen Faserverbundwerkstofflagen. **Flächig verbunden** bedeutet dabei, dass wenigstens 50%, vorzugsweise wenigstens 75%, oder vorzugsweise wenigstens 90%, oder vorzugsweise wenigstens 95%, oder vorzugsweise wenigstens 99%, oder 100% ("vollflächige" Verbindung) der einander zugewandten Oberflächen zweier benachbarter Faserverbundwerkstofflagen miteinander unmittelbar verbunden sind. Der Grad der Verbindung kann mikroskopisch in Querschnitten bestimmt werden, oder auch durch die Abwesenheit von Hohlräumen, insbesondere Lufteinschlüssen im Faserverbundwerkstoff bestimmt werden.

Vorzugsweise erhält man nach dem erfindungsgemäßen Verfahren Polyamid basierte quasi-isotrope Mehrschichtverbundwerkstoffe mit einer E-Modul Kombination in 0° Richtung von größer 30 GPa und in 90° Richtung von größer 30 GPa, d.h. einem annähernd isotropen und damit metallischem Materialverhalten. Besonders bevorzugt weist ein erfindungsgemäßer Mehrschichtverbundwerkstoff eine E-Modul Kombination in 0° Richtung von größer 35 GPa und in 90° Richtung von größer 35 GPa auf.

### Verfahren zur Herstellung eines Erzeugnisses bzw. Strukturbauteils für die Verwendung in einem Automobil

Zur Herstellung eines Erzeugnisses, insbesondere eines großflächigen Strukturbauteils für die Verwendung im Automobil, werden die folgenden Schritte durchgeführt:
(i) Bereitstellen eines erfindungsgemäßen Polyamid basierten Mehrschichtverbundwerkstoffs als Ausgangsmaterial,
(ii) Umformung und/oder Assemblierung mit weiteren Komponenten zum Erzeugnis.

Die Erfindung betrifft deshalb auch ein Verfahren zur Herstellung eines Erzeugnisses, vorzugsweise eines Strukturbauteils, insbesondere eines Strukturbauteils für die Verwendung im Automobil, durch
(i) Bereitstellen wenigstens eines Mehrschichtverbundwerkstoffs (1), umfassend mindestens drei übereinander liegende Faserverbundwerkstofflagen (2) und (3), die relativ zueinander definiert werden als zwei außenliegende Faserverbundwerkstofflagen (3) und mindestens eine innenliegende Faserverbundwerkstofflage (2), wobei
   jede dieser mindestens drei Faserverbundwerkstofflagen (2) und (3), Endlosfasern (4) in Form eines textilen Halbzeugs enthält, wobei die Endlosfasern (4) innerhalb der jeweiligen Faserverbundwerkstofflage (2) oder (3) beliebig orientiert sind und in Polyamid basiertem Kunststoff (5) eingebettet sind,
   mit der Maßgabe, dass
   a) die mindestens eine innenliegende Faserverbundwerkstofflage (2) zu den außenliegenden Faserverbundwerkstofflagen (3) um 0° bis 90° rotiert ist,
   b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbund-werkstofflagen (3) um 0° bis 90° rotiert ist,
   wobei die Orientierung einer Faserverbundwerkstofflage (2) oder (3) durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet, und
(ii) Umformung und/oder Assemblierung mit weiteren Komponenten.

Bevorzugt ist ein Verfahren, bei dem das textile Halbzeug ein balanciertes Gewebe, Vlies oder eine Fasermatte ist.

Bevorzugt ist ein Verfahren, bei dem das Dickenverhältnis der Summe der beiden außenliegenden Faserverbundwerkstofflagen (3) zur Summe aller innenliegenden Faserverbundwerkstofflagen (2) im Bereich von 0,25 bis 5 liegt.

Bevorzugt ist ein Verfahren, worin die Faserverbundwerkstofflagen (2) und (3) erhältlich sind durch Auftragen eines geschmolzenen, thermoplastischen Kunststoffs auf ein über die Glasübergangstemperatur des einzusetzenden Kunststoffs vorgeheiztes Rohtextil.

Bevorzugt ist ein Verfahren bei dem der Faservolumengehalt der außenliegenden Faserverbundwerkstofflagen (3) höchstens 60 Vol.-%, bezogen auf das Volumen der außenliegenden Faserverbundwerkstofflagen (3) beträgt.

Bevorzugt ist ein Verfahren bei dem die mindestens drei Faserverbundwerkstofflagen (2) und (3) im Wesentlichen symmetrisch angeordnet sind, wobei die beiden außenliegenden Faserverbundwerkstofflagen (3) in Bezug auf wenigstens ein Merkmal aus der Gruppe chemische Zusammensetzung, Faservolumengehalt und Schichtdicke im Wesentlichen gleich aufgebaut sind.

Bevorzugt ist ein Verfahren bei dem der Mehrschichtverbundwerkstoff (1) eine Gesamtdicke von 0,3 bis 2,5 mm aufweist.

Bevorzugt ist ein Verfahren wobei der Mehrschichtverbundwerkstoff (1) ein bis acht innenliegende Faserverbundwerkstofflagen (2) umfasst.

Bevorzugt ist ein Verfahren wobei die mindestens drei Faserverbundwerkstofflagen (2) und (3) im Wesentlichen keine Hohlräume, insbesondere im Wesentlichen keine Lufteinschlüsse, aufweisen.

Bevorzugt ist ein Verfahren wobei die Endlosfasern (4) ausgewählt sind aus der Gruppe bestehend aus Glasfasern, Carbonfasern, Basaltfasern, Aramidfasern, Liquid-crystal-Polymer-Fasern, Polyphenylensulfid-Fasern, Polyetherketon-Fasern, Polyetheretherketon-Fasern, Polyetherimid-Fasern und deren Mischungen, insbesondere Glasfasern und/oder Carbonfasern.

Erfindungsgemäß bevorzugte Erzeugnisse bzw. nach dem erfindungsgemäßen Verfahren herzustellende Erzeugnisse sind Strukturbauteile, besonders bevorzugt Strukturbauteile im Automobil bzw. im Automobilbau oder Bestandteile eines Strukturbauteils bzw. Bestandteile eines Strukturbauteils im Automobil.

Bevorzugte Strukturbauteile sind lokale Verstärkungen für Strukturbauteile für den Unterboden von Automobilen, lokale Verstärkungen für Sitzkomponenten, lokale Verstärkungen für Montageträger im Automobilinnenraum, lokale Verstärkungen für Airbaggehäuse, Bestandteil(e) einer Unterbodenverkleidung, Bestandteil(e) einer Sitzkomponente, Bestandteil(e) eines Montageträgers oder Bestandteil(e) eines Airbaggehäuses.

Die Erfindung betrifft deshalb vorzugsweise ein Strukturbauteil, d.h. ein Bauteil oder Erzeugnis, dessen Funktion die Übernahme struktureller externe Lasten beinhaltet, enthaltend wenigstens einen erfindungsgemäßen Mehrschichtverbundwerkstoff. Vorzugsweise handelt es sich bei dem Strukturbauteil um ein Bauteil, das im Automobil eingesetzt wird, insbesondere um einen Montageträger.

### Verwendung

Die vorliegende Erfindung betrifft deshalb auch die Verwendung eines Mehrschichtverbundwerkstoffs (1), umfassend mindestens drei übereinander liegende Faserverbundwerkstofflagen (2) und (3), die relativ zueinander definiert werden als zwei außenliegende Faserverbundwerkstofflagen (3) und mindestens eine innenliegende Faserverbundwerkstofflage (2), wobei
jede dieser mindestens drei Faserverbundwerkstofflagen (2) und (3), Endlosfasern (4) in Form eines textilen Halbzeugs enthält, wobei die Endlosfasern (4) innerhalb der jeweiligen Faserverbundwerkstofflage (2) oder (3) beliebig orientiert sind und in Polyamid basiertem Kunststoff (5) eingebettet sind,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
wobei die Orientierung einer Faserverbundwerkstofflage (2) oder (3) durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet,
zur Herstellung von Strukturbauteilen, besonders bevorzugt Strukturbauteilen im Automobil bzw. im Automobilbau oder Bestandteile eines Strukturbauteils bzw. Bestandteile eines Strukturbauteils im Automobil.

Bevorzugt ist eine Verwendung, bei der das textile Halbzeug ein balanciertes Gewebe, Vlies oder eine Fasermatte ist.

Bevorzugt ist eine Verwendung, bei der das Dickenverhältnis der Summe der beiden außenliegenden Faserverbundwerkstofflagen (3) zur Summe aller innenliegenden Faserverbundwerkstofflagen (2) im Bereich von 0,25 bis 5 liegt.

Bevorzugt ist eine Verwendung, worin die Faserverbundwerkstofflagen (2) und (3) erhältlich sind durch Auftragen eines geschmolzenen, thermoplastischen Kunststoffs auf ein über die Glasübergangstemperatur des einzusetzenden Kunststoffs vorgeheiztes Rohtextil.

Bevorzugt ist eine Verwendung worin der Faservolumengehalt der außenliegenden Faserverbundwerkstofflagen (3) höchstens 60 Vol.-%, bezogen auf das Volumen der außenliegenden Faserverbundwerkstofflagen (3) beträgt.

Bevorzugt ist eine Verwendung bei der die mindestens drei Faserverbundwerkstofflagen (2) und (3) im Wesentlichen symmetrisch angeordnet sind, wobei die beiden außenliegenden Faserverbundwerkstofflagen (3) in Bezug auf wenigstens ein Merkmal aus der Gruppe chemische Zusammensetzung, Faservolumengehalt und Schichtdicke im Wesentlichen gleich aufgebaut sind.

Bevorzugt ist eine Verwendung bei der der Mehrschichtverbundwerkstoff (1) eine Gesamtdicke von 0,3 bis 2,5 mm aufweist.

Bevorzugt ist eine Verwendung wobei der Mehrschichtverbundwerkstoff (1) ein bis acht innenliegende Faserverbundwerkstofflagen (2) umfasst.

Bevorzugt ist eine Verwendung wobei die mindestens drei Faserverbundwerkstofflagen (2) und (3) im Wesentlichen keine Hohlräume, insbesondere im Wesentlichen keine Lufteinschlüsse, aufweisen.

Bevorzugt ist eine Verwendung wobei die Endlosfasern (4) ausgewählt sind aus der Gruppe bestehend aus Glasfasern, Carbonfasern, Basaltfasern, Aramidfasern, Liquid-crystal-Polymer-Fasern, Polyphenylensulfid-Fasern, Polyetherketon-Fasern, Polyetheretherketon-Fasern, Polyetherimid-Fasern und deren Mischungen, insbesondere Glasfasern und/oder Carbonfasern.

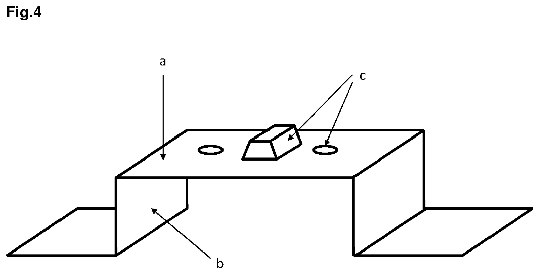

Vorzugsweise ist das erfindungsgemäße Strukturbauteil ein Montageträger, wie er in einer Ausführungsform beispielsweise in **Fig. 4** dargestellt ist.

Ein weiterer Vorteil des erfindungsgemäßen Polyamid basierten Mehrschichtverbundwerkstoffs ist, dass er in beliebige Formen umgeformt werden kann. Zur Umformung können alle dem Fachmann bekannten Umformungsverfahren eingesetzt werden. Solche Umformungsverfahren können unter Druck- und/oder Wärmeeinwirkung erfolgen.

Gemäß einer Ausführungsform des erfindungsgemäßen Verfahrens erfolgt die Umformung unter Wärmeeinwirkung, insbesondere durch Thermoformierung.

Die erfindungsgemäßen Polyamid basierten Mehrschichtverbundwerkstoffe weisen nicht nur eine überraschend quasi-isotrope Steifigkeit auf, sondern widerstehen auch besonders gut punktuellen Belastungen. Hierdurch eignen sich erfindungsgemäße Mehrschichtverbundwerkstoffe insbesondere für den Einsatz in mechanisch belasteten Strukturbauteilen.

Überraschenderweise wurde im Rahmen der Arbeiten zudem gefunden, dass ein erfindungsgemäßer Polyamid basierter Mehrschichtverbundwerkstoff mit einer E-Modul Kombination in 0° Richtung von größer 30 GPa und in 90° Richtung von größer 30 GPa, d.h. einem quasi-isotropen Materialverhalten, besonders gut die an ein Strukturbauteil im Automobil gestellten Anforderungen der punktuellen Belastbarkeit erfüllt. Bevorzugt weist ein erfindungsgemäßer Mehrschichtverbundwerkstoff eine E-Modul Kombination in 0° Richtung von größer 35 GPa und in 90° Richtung von größer 35 GPa auf. Wie in den Ausführungsbeispielen veranschaulicht, kann man diese Auswahlregel v.a. durch Einstellung der relativen Schichtdicken im Mehrschichtverbundwerkstoff und/oder der Faservolumengehalte steuern.

Zur Erfindung gehört auch eine Faserverbundwerkstofflage, umfassend unidirektional ausgerichtete, in einem auf Polyamid basierten Kunststoff eingebettete Endlosfasern. Dabei weisen die unidirektional ausgerichteten Endlosfasern vorzugsweise ein E-Modul von größer 240 GPa auf. Praktische Versuche haben gezeigt, dass sich derartige Faserverbundwerkstofflagen besonders gut zu erfindungsgemäßen Polyamid basierten Mehrschichtverbundwerkstoffen mit ausgesprochen guter quasi-isotroper Steifigkeit weiterverarbeiten lassen.

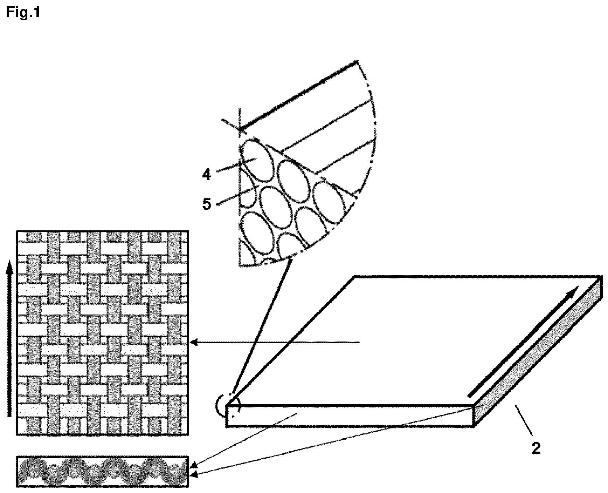

Weitere Einzelheiten und Vorteile der Erfindung ergeben sich aus den **Fig.1****,** **Fig.2****,** **Fig.3** und **Fig.4** sowie den Beschreibungen dieser bevorzugten Ausführungsformen.

**Fig. 1** zeigt eine Faserverbundwerkstofflage (2) mit Gewebeverstärkung in schematischer und perspektivischer Darstellung mit Ausschnittsvergrößerung der Ansichtsflächen. Das für eine Faserverbundwerkstofflage gemäß in **Fig. 1** eingesetzte textile Halbzeug auf Basis eines balancierten Gewebes verfügt über eine Leinwandbindung, worin jeweils 50% der Endlosfasern in 0° und in 90° orientiert sind. Die Ausschnittsvergrößerung in **Fig.1** zeigt, dass die Verstärkungsfasern der Faserverbundwerkstofflage in Form eines textilen Halbzeugs basierend auf Endlosfasern (4) vorliegen, die innerhalb der Lage in zwei Richtungen unidirektional ausgerichtet sind, wobei die Endlosfasern (4) in Form eines balancierten Gewebes in Leinwandbindung vorliegen und in Polyamid basiertem Kunststoff (5) eingebettet sind. Die Orientierung der Faserverbundwerkstofflage wird durch die Orientierung der darin enthaltenen unidirektional ausgerichteten Endlosfasern bestimmt. Die Hauptrichtung, d.h. die Produktionsrichtung des textilen Halbzeugs, hier in Form eines balancierten Gewebes, ist in der **Fig. 1** mit einem Pfeil gekennzeichnet. Die Endlosfasern erstrecken sich über die gesamte Länge bzw. Breite der Faserverbundwerkstofflage.

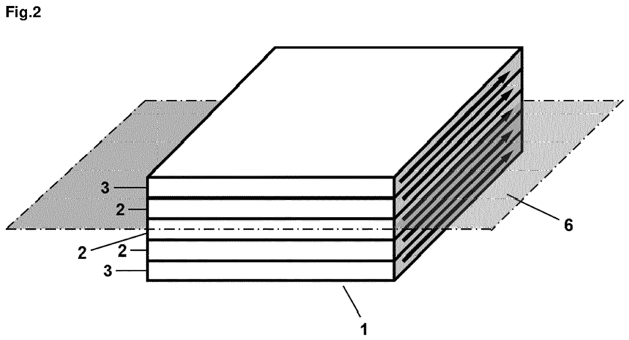

**Fig.2** zeigt einen erfindungsgemäßen Mehrschichtverbundwerkstoff (1) in schematischer und perspektivischer Darstellung aus fünf übereinanderliegenden Faserverbundwerkstofflagen in mittensymmetrischer Anordnung, wobei die drei innenliegenden Faserverbundwerkstofflagen (2) gleich orientiert sind und ihre Orientierung relativ zu den beiden außenliegenden Faserverbundwerkstofflagen (3) um 0° rotiert sind. Im Mehrschichtverbundwerkstoff (1) gemäß **Fig.2** sind somit alle fünf übereinanderliegenden Faserverbundwerkstofflagen gleich orientiert, was durch Pfeile angedeutet ist. Die Faserverbundwerkstofflagen (2) und (3) sind vollflächig miteinander verbunden. Die Faserverbundwerkstofflagen können sich in ihrem Aufbau, z.B. hinsichtlich Faseranteil, Faserwerkstoff, Gewebebindung unterscheiden. Der Lagenaufbau des Mehrschichtverbundwerkstoffs (1) ist in **Fig.2** an der Symmetrieebene (6) gespiegelt.

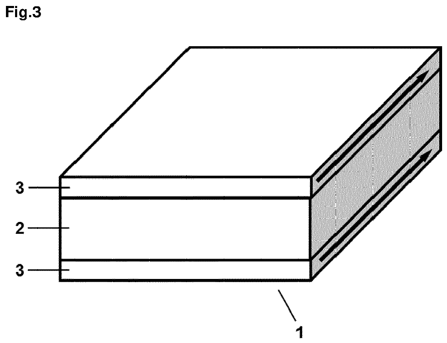

**Fig.3** zeigt einen Mehrschichtverbundwerkstoff (1) in schematischer und perspektivischer Darstellung aus drei übereinanderliegenden Faserverbundwerkstofflagen (3), (2), (3), wobei die innenliegende Faserverbundwerkstofflage (2) eine unterschiedliche Dicke als die beiden außenliegenden Faserverbundwerkstofflagen (3) aufweist. Die beiden außenliegenden Faserverbundwerkstofflagen (2) sind gleich orientiert. Die Faserverstärkung der innenliegenden Faserverbundwerkstofflage (2) kann in Form eines beliebigen Textils vorliegen. Eine Mittensymmetrie ist aufgrund des dreilagigen Aufbaus automatisch gegeben.

**Fig.4** zeigt einen Montageträger in schematischer und perspektivischer Darstellung. Die Oberseite (a) und die Unterseite (b) des Montageträgers enthalten einen erfindungsgemäßen Mehrschichtverbundwerkstoff. Im Umformprozess eingefügte funktionale Strukturen (c) dienen der Montage von Baugruppen beim Einbau des Montageträgers in der Zielanwendung.

### Beispiele

### 1. Beschreibung der Rohstoffe und Prüfmethoden

### Komponente A

Polyamid 6 mit einer nach **ISO 307** in 0,5 gew.-%iger Lösung in 96 gew.-%iger Schwefelsäure bei 25 °C bestimmten Viskositätszahl von 130 ml/g.

### Komponente B

Carbonfaser Torayca® T300 der Firma Toray Carbon Fiber Europe mit einem Einzelfilamentdurchmesser von 7, einer Dichte von 1,76 g/cm³ und einem Zugmodul von 230 GPa. Geliefert werden 3000 Einzelfilamente in einem Faserbündel (Roving) als Gewebe mit Köperbindung und einem Flächengewicht von 200 g/m².

### Messmethoden:

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

### Bestimmung der Dicke und des Dickenverhältnisses

Die Dickenbestimmung der Faserverbundwerkstofflagen sowie der nach dem Fügen resultierenden Mehrschichtverbundwerkstoffe erfolgte mit einer handelsüblichen Bügelmessschraube. Als Ergebnis wird der arithmetische Mittelwert von 5 Einzelmessungen an unterschiedlichen Positionen angegeben.

Das Dickenverhältnis der beiden außenliegenden Faserverbundwerkstofflagen zur Summe der innenliegenden Faserverbundwerkstofflagen kann zum einen im Zuge der Herstellung durch Bestimmung der Einzeldicken der Faserverbundwerkstofflagen vor dem Verbinden der Faserverbundwerkstofflagen zum Mehrschichtverbundwerkstoff erfolgen. Die praktischen Versuche zeigten, dass sich bei den gängigen Verfahren zum Verbinden der Faserverbundwerkstofflagen, insbesondere Laminieren unter Druck- und Wärmeeinwirkung, das Verhältnis der Dicken zueinander auch bei einer Kompression und damit Verringerung der Dicken insgesamt nicht wesentlich ändert. Die hier beschriebenen Dickenverhältnisse beziehen sich auf die im Zuge der Herstellung bestimmten Einzeldicken der Faserverbundwerkstofflagen vor dem Verbinden der Faserverbundwerkstofflagen zum Mehrschichtverbundwerkstoff.

Alternativ kann die Bestimmung des Dickenverhältnisses auch im fertigen Mehrschichtverbundwerkstoff erfolgen. Hierzu wird ein Querschnitt des Materials mikroskopisch untersucht. Aufgrund des Orientierungswechsels der Faserlaufrichtung beim Übergang von den innenliegenden zu den beiden außenliegenden Faserverbundwerkstofflagen lassen sich diese Faserverbundwerkstofflagen im Mikroskop gut identifizieren. Für die Schichtdickenbestimmung wird als Schichtgrenze eine Ebene eingezogen, die parallel zu den durch die Faserlaufrichtung bestimmten Ebenen verläuft und auf der Hälfte des Abstandes von letzter zur außenliegenden Faserverbundwerkstofflage gehörenden Endlosfaser und erster zur innenliegenden Faserverbundwerkstofflage gehörenden Endlosfaser eingezogen wird.

### Hohlraumgehaltsbestimmung

Die Ermittlung erfolgte mittels der Dickendifferenzmethode wie oben beschrieben an den Prüfmustern, welche zuvor mittels einer Intervallheizpresse gefügt wurden. Die Bestimmung der tatsächlichen Probendicke erfolgte an 5 Messpunkten, welche über das zu untersuchende Bauteil verteilt waren. Für die Berechnung des Hohlraumgehalts wurde der arithmetische Mittelwert der 5 Einzelbestimmungen der tatsächlichen Probendicke verwendet.

### Biege-E-Modul

Für die Bestimmung des Biege-E-Moduls wurden aus den hergestellten Mehrschichtverbundwerkstoffplatten zunächst 5 Probekörper je Orientierung (0°, 90°) mit einer Mutronic Diadisc 5200 Trennsäge unter Verwendung von Dia Trennscheiben CFK fein präpariert. Anschließend wurde mithilfe einer Bügelmessschraube die für die Prüfungen relevanten, exakten Probenkörpermaße (Breite und Dicke) bestimmt. Die Durchführung der Prüfung erfolgte in Anlehnung an DIN ISO 14125. Abweichungen zu dieser Norm beziehen sich auf die Probekörperdicke, die aufgrund der Anzahl der Faserverbundlagen im Mehrschichtaufbau lagenspezifisch und unveränderlich ist und so von der in der Norm vorgeschriebenen Probendicke abweichen kann. In dem resultierenden Kraft- Weg-Diagramm entspricht die Steigung dem Biege-E-Modul. Als Ergebnis wurde der arithmetische Mittelwert der 5 Einzelmessungen ermittelt und wird hier angegeben.

### Ermittlung des Faservolumengehalts

In dem vorliegenden Prozess wurde das textile Halbzeug auf Basis von Fasern der Komponente B mit einer konstanten Geschwindigkeit der Benetzung durch die Kunststoffschmelze auf Basis der Komponente A geführt. Hierdurch errechnete sich der Faservolumengehalt einer Faserverbundwerkstofflage aus der Differenz des Schmelzevolumenstroms der Kunststoffschmelze und dem Produkt aus der Produktionsgeschwindigkeit der Faserverbundwerkstofflage sowie dem zu produzierenden Querschnitt der Faserverbundwerkstofflage.

### 2. Herstellung und Ergebnisse

### Herstellung der Faserverbundwerkstofflagen

Die Herstellung der Faserverbundwerkstofflage aus den oben beschriebenen Komponenten A und B erfolgte nach dem in EP 0 131 879 A1 beschriebenen Verfahren. Das Textil auf Basis eines Gewebes mit einem Flächengewicht von 200g/m² und Köperbindung wurde mit Komponente A beidseitig auf der Rohtextilebene beaufschlagt. Nach erfolgter Druck-/ Temperaturbeaufschlagung resultierten nachfolgende Zusammensetzungen der Faserverbundwerkstofflagen als Organoblech:

**Tabelle 1: Übersicht über die Eigenschaften der einzelnen Verbundwerkstofflagen**

| Verbundwerkstofflage | Gehalt an Komponente A in [Vol.-%] | Gehalt an Komponente B in [Vol.-%] | Schichtdicke in [µm] |
|---|---|---|---|
| 1 | 50 | 50 | 250 |

### Herstellung der Mehrschichtverbundwerkstoffe

Durch gezielte Aneinanderreihung der Faserverbundwerkstofflagen in nachstehenden Orientierungen wurden Mehrschichtverbundwerkstoff-Prüfmuster erhalten, welche zur weiteren Charakterisierung genutzt wurden.

**Tabelle 2: Übersicht über Typ, Orientierung und Anzahl der verwendeten Faserverbundwerkstofflagen in den Mehrschichtverbundwerkstoffen**

| Prüfmuster | Innenlagen | | | Außen lagen | | |
|---|---|---|---|---|---|---|
| | Verbundwerkstofflage | Orientierung | Gesamtanzahl | Verbundwerkstofflage | Orientierung | Gesamtanzahl |
| M | 1 | 0° | 6 | 1 | 0° | 2 |

Die Prüfmuster wurden nach der Aneinanderreihung in einer Intervallheißpresse semikontinuierlich miteinander verbunden. Der flächig anliegende Pressdruck betrug hierbei 25 bar. Die Temperatur in der Heizzone lag bei 300°C und die Temperatur in der Kühlzone lag bei 100°C. Des Weiteren lag der Vorschub je Takt bei 30 mm und die Taktzeit bei 10 Sek. Die Dicken der einzelnen Textil-Muster blieben nach dem Fügen zu einem Prüfmuster in diesem erhalten.

### Ergebnisse der Biege-E-Modul Ermittlung und der Bestimmung des Hohlraumgehalts

**Tabelle 3: Biege-E-Module in 0° und 90° Orientierung von Mehrschichtverbundwerkstoffen mit unterschiedlichem Lagenaufbau**

| Prüfmuster | Biege-E-Modul in 90° Orientierung in [GPa] | Biege-E-Modul in 0° Orientierung in [GPa] | Prüfmusterdicke in [µm] | Hohlraumgehalt in [%] |
|---|---|---|---|---|
| M | 48 | 48 | 2 | 0% |

Die Versuche zeigen, dass ein erfindungsgemäßer Polyamid basierter Mehrschichtverbundwerkstoff M sowohl in 90°-Orientierung als auch in 0°-Orientierung ein gleichwertiges Biege E-Modul aufwies, das zudem vergleichbar mit dem Biege-E-Modul metallischer Werkstoffe war (z.B. Magnesium: 44 GPa, unabhängig von der Probenorientierung). Ergebnisse, die z.B. in WO 2017/072053 A1 gezeigt werden, weisen in 90° Orientierung jeweils Biege-E-Module auf, die nur maximal 67%, teilweise nur 15% des entsprechenden Werts in 0°-Richtung betragen und sich somit deutlich von den Eigenschaften metallischer Werkstoffe unterscheiden. Mit den für einen auf Basis von Kunststoff der Komponente A und textilem Halbzeug der Komponente B erfindungsgemäßen Mehrschichtverbundwerkstoff ermittelten Werten ist gewährleistet, dass die erfindungsgemäßen Proben einer multiaxialen Belastung, wie etwa dem Herunterfallen beispielsweise eines daraus herzustellenden Bauteils, insbesondere Gehäuses, oder einer ungewollten flächigen Belastung desselben, standhalten. Des Weiteren ist ersichtlich, dass der Gehalt an Hohlräumen durch den Herstellungsprozess minimiert wurde und für alle untersuchten Proben unterhalb von 0,5% lag.

## Patentansprüche

1. Mehrschichtverbundwerkstoff (1), umfassend mindestens drei übereinander liegende Faserverbundwerkstofflagen (2) und (3), die relativ zueinander definiert werden als zwei außenliegende Faserverbundwerkstofflagen (3) und mindestens eine innenliegende Faserverbundwerkstofflage (2), wobei
jede dieser mindestens drei Faserverbundwerkstofflagen (2) und (3), Endlosfasern (4) in Form eines textilen Halbzeugs enthält, wobei die Endlosfasern (4) innerhalb der jeweiligen Faserverbundwerkstofflage (2) oder (3) beliebig orientiert sind und in Polyamid basiertem Kunststoff (5) eingebettet sind,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
wobei die Orientierung einer Faserverbundwerkstofflage (2) oder (3) durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.

2. Mehrschichtverbundwerkstoff (1) gemäß Anspruch 1, **dadurch gekennzeichnet, dass** das textile Halbzeug ein balanciertes Gewebe, Vlies oder eine Fasermatte ist.

3. Mehrschichtverbundwerkstoff (1) gemäß der Ansprüche 1 oder 2, **dadurch gekennzeichnet, dass** das Dickenverhältnis der Summe der beiden außenliegenden Faserverbundwerkstofflagen (3) zur Summe aller innenliegenden Faserverbundwerkstofflagen (2) im Bereich von 0,25 bis 5 liegt.

4. Mehrschichtverbundwerkstoff (1) gemäß einem oder mehrerer der Ansprüche 1 bis 3, **dadurch gekennzeichnet, dass** die Faserverbundwerkstofflagen (2) und (3) erhältlich sind durch Auftragen eines geschmolzenen, thermoplastischen Kunststoffs auf ein über die Glasübergangstemperatur des einzusetzenden Kunststoffs vorgeheiztes Rohtextil.

5. Mehrschichtverbundwerkstoff (1) gemäß einem oder mehrerer der Ansprüche 1 bis 4, **dadurch gekennzeichnet, dass** der Faservolumengehalt der außenliegenden Faserverbundwerkstofflagen (3) höchstens 60 Vol.-%, bezogen auf das Volumen der außenliegenden Faserverbundwerkstofflagen (3) beträgt.

6. Mehrschichtverbundwerkstoff (1) gemäß einem oder mehrerer der Ansprüche 1 bis 5, **dadurch gekennzeichnet, dass** die mindestens drei Faserverbundwerkstofflagen (2) und (3) im Wesentlichen symmetrisch angeordnet sind, wobei die beiden außenliegenden Faserverbundwerkstofflagen (3) in Bezug auf wenigstens ein Merkmal aus der Gruppe chemische Zusammensetzung, Faservolumengehalt und Schichtdicke im Wesentlichen gleich aufgebaut sind.

7. Mehrschichtverbundwerkstoff (1) gemäß einem oder mehrerer der Ansprüche 1 bis 6, **dadurch gekennzeichnet, dass** der Mehrschichtverbundwerkstoff (1) eine Gesamtdicke von 0,3 bis 2,5 mm aufweist.

8. Mehrschichtverbundwerkstoff (1) gemäß einem oder mehrerer der Ansprüche 1 bis 7, wobei der Mehrschichtverbundwerkstoff (1) ein bis acht innenliegende Faserverbundwerkstofflagen (2) umfasst.

9. Mehrschichtverbundwerkstoff (1) gemäß einem oder mehrerer der Ansprüche 1 bis 8, wobei die mindestens drei Faserverbundwerkstofflagen (2) und (3) im Wesentlichen keine Hohlräume, insbesondere im Wesentlichen keine Lufteinschlüsse, aufweisen.

10. Mehrschichtverbundwerkstoff (1) gemäß einem oder mehrerer der Ansprüche 1 bis 9,wobei die Endlosfasern (4) ausgewählt sind aus der Gruppe bestehend aus Glasfasern, Carbonfasern, Basaltfasern, Aramidfasern, Liquid-crystal-Polymer-Fasern, Polyphenylensulfid-Fasern, Polyetherketon-Fasern, PolyetheretherketonFasern, Polyetherimid-Fasern und deren Mischungen, insbesondere Glasfasern und/oder Carbonfasern.

11. Verfahren zur Herstellung eines, Mehrschichtverbundwerkstoffs gemäß einem oder mehrerer der Ansprüche 1 bis 10 umfassend folgende Schritte:
- Bereitstellen mindestens einer innenliegenden Faserverbundwerkstofflage (2) und zweier außenliegenden Faserverbundwerkstofflagen (3),
- Einlegen der mindestens einen innenliegenden Faserverbundwerkstofflage (2) zwischen die außenliegenden Faserverbundwerkstofflagen (3) mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird,
- Verbinden der geschichteten Faserverbundwerkstofflagen (2) und (3), insbesondere mittels Druck und Temperatur, zum Mehrschichtverbundwerkstoff (1) und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.

12. Strukturbauteil oder Trägerbauteil, **dadurch gekennzeichnet, dass** dieses einen Mehrschichtverbundwerkstoff (1) gemäß einem oder mehrerer der Ansprüche 1 bis 10 enthält.

13. Strukturbauteil gemäß Anspruch 12, **dadurch gekennzeichnet, dass** es sich um lokale Verstärkungen für Strukturbauteile für den Unterboden von Automobilen, lokale Verstärkungen für Sitzkomponenten, lokale Verstärkungen für Montageträger im Automobilinnenraum, lokale Verstärkungen für Airbaggehäuse, Bestandteil einer Unterbodenverkleidung, Bestandteil einer Sitzkomponente, Bestandteil eines Montageträgers oder Bestandteil eines Airbaggehäuses handelt.

14. Strukturbauteil gemäß Anspruch 12 oder 13, **dadurch gekennzeichnet, dass** es sich um ein Bauteil im Automobilbau handelt, vorzugsweise um einen Montageträger.

15. Verwendung wenigstens eines Mehrschichtverbundwerkstoffs umfassend zwei außenliegende Faserverbundwerkstofflagen (3) und mindestens eine innenliegende Faserverbundwerkstofflage (2), wobei jede dieser mindestens drei Faserverbundwerkstofflagen (2) und (3) Endlosfasern (4) in Form eines textilen Halbzeugs, vorzugsweise in Form eines balancierten Gewebes, Vlieses oder Fasermatte, enthält, wobei die Endlosfasern (4) innerhalb der jeweiligen Faserverbundwerkstofflage (2) oder (3) beliebig orientiert und in Polyamid basiertem Kunststoff (5) eingebettet sind, zur Herstellung von Bauteilen, vorzugsweise von Strukturbauteilen,
mit der Maßgabe, dass
a) die mindestens eine innenliegende Faserverbundwerkstofflage (2) zu den außenliegenden Faserverbundwerkstofflagen (3) um 0° bis 90° rotiert ist,
b) bei ≥2 innenliegenden Faserverbundwerkstofflagen (2) diese innenliegenden Faserverbundwerkstofflagen im Wesentlichen gleich orientiert sind und ihre Orientierung zu den außenliegenden Faserverbundwerkstofflagen (3) um 0° bis 90° rotiert ist,
und die Orientierung einer Faserverbundwerkstofflage (2) oder (3) durch die Orientierung des die Endlosfasern enthaltenden textilen Halbzeugs festgelegt wird und beliebig orientiert ein Abweichen der Hauptrichtungen der Endlosfasern in einer Faserverbundwerkstofflage von der Produktionsrichtung des eingesetzten textilen Halbzeugs in der Ebene im Bereich von > 0° und < 90° bedeutet.
